# EUROPEAN PATENT APPLICATION

(11) **EP 3 272 504 A1**
(43) Date of publication of application: **24.01.2018**
(21) Application number: 16765310.4
(22) Date of filing: 21.03.2016
(51) Int. Cl.: B29C 67/00, B33Y 50/02, B33Y 30/00

(54) **PRINT MEDIUM USED IN 3D PRINTING, COLOR 3D PRINTING METHOD, AND COLOR 3D PRINTER AND METHOD OF CONTROLLING SAME**

(30) Priority: 19.03.2015 KR 20150038311
(71) Applicant: Jun, Jin-hwan, Anyang-si, Gyeonggi-do 14102 (KR); Kim, Jong Ho, Seosan-si, Chungcheongnam-do 32027 (KR); Park, Hyung Oh, Incheon 22003 (KR); Song, Jang-sup, Jeonju-si, Jeollabuk-do 54944 (KR)
(72) Inventor: Jun, Jin-hwan, Anyang-si, Gyeonggi-do 14102 (KR); Kim, Jong Ho, Seosan-si, Chungcheongnam-do 32027 (KR); Park, Hyung Oh, Incheon 22003 (KR); Song, Jang-sup, Jeonju-si, Jeollabuk-do 54944 (KR)
(74) Representative: Walaski, Jan Filip
(86) International application number: PCT/KR2016/002832
(87) International publication number: WO 2016/148554

(57) **Abstract**

The present invention relates to a three-dimensional (3D) printing method, and more particularly, to a full-color or substantially full-color 3D printing method. A 3D printing method according to an aspect of the present invention is
a 3D printing method for fabricating a solid object 3D object by depositing a plurality of layers, The 3D printing method comprising: preparing a print medium including a color particle and a curable material of a liquid state, the curable material containing the color particle, wherein the color particle includes a photonic crystal particle and has a structural color defined according to a particle distance; preparing a 3D modeling data for the 3Dobject, wherein the 3D modeling data includes a layer data for at least one of the plurality of layers, and the layer data includes a shape data having a coordinate to be cured in the layer and a color data having a color value of the coordinate; preparing a working area for a specific layer of the plurality of layers, wherein the working area is a space having a predetermined thickness inward from a one surface of the printing medium; imparting a color to the print medium, wherein the color is imparted by adjusting the structural color of the color particles based on the color value of the color data among the layer data for the specific layer; by curing the curable material based on the coordinate of the shape data of the layer data for the specific layer, fixing the color imparted to the print medium and simultaneously fabricating the specific layer.

## Description

### [Technical Field]

The present invention relates to a print medium, and more particularly, to a print medium used in stereo lithography apparatus (SLA) three-dimensional (3D) printing to enable color 3D printing.

The present invention also relates to a 3D printing method, and more particularly, to a full-color or substantially full-color 3D printing method.

The present invention also relates to a 3D printer and a method of controlling the 3D printer, and more particularly, to a 3D printer for performing color SLA 3D printing and a method for controlling the 3D printer.

The present invention also relates to a 3D printer and a method for controlling the 3D printer, and more particularly, to a 3D printer for forming color SLA 3D printing and a method for controlling the 3D printer.

### [Background Art]

Three-dimensional (3D) printing is technology in which a powder or liquid material is hardened to form layers one after another and then the layers are deposited to fabricate a 3D object. Unlike conventional processing technology in which a 3D material is subjected to a milling or cutting process, 3D printing employs a method of stacking up 2D layers and thus has an advantage in that it is possible to manufacture a shape which cannot be implemented with conventional computer numerical control (CNC) processing and the like.

Since 3D printing deviates from conventional production methods, such as machine cutting, fabricating, and the like, and enables fabrication of products in almost all shapes, application fields thereof extensively ranges from household wares, such as toys and ornaments, to machinery equipment of cars and airplanes or the medical field, such as dentistry. Moreover, it is possible to fabricate various 3D objects according to a package process by only changing modeling data of a 3D object without changing facilities, and thus 3D printing is appropriate for recent small quantity batch production or customized product manufacturing. Therefore, 3D printing is expected to bring about dramatic changes in manufacturing technology of the overall industry, and thus is also referred to as the third industrial revolution.

### [Disclosure]

### [Technical Problem]

The present invention is directed to providing a print medium which enables color three-dimensional (3D) printing.

The present invention is directed to imparting a color to a print medium and enabling 3D printing by controlling a structural color of photonic crystal particles.

The present invention is directed to providing a print medium capable of expressing achromatic colors, which are difficult to express with structural colors, and also imparting full colors by adjusting even saturation and brightness.

The present invention is directed to providing a 3D printing method in which various colors can be expressed on a 3D object in 3D printing.

The present invention is directed to providing a 3D printing method in which it is possible to manufacture a 3D object having various colors by controlling a structural color of photonic crystal particles.

The present invention is directed to providing a 3D printer which enables color 3D printing and a method for controlling the 3D printer.

The present invention is directed to providing a 3D printer capable of expressing full colors or substantially full colors by controlling a structural color of photonic crystal particles and a method for controlling the 3D printer.

The present invention is directed to providing a 3D printer capable of printing in various colors in units of pixels and a method for controlling the 3D printer.

The present invention is directed to providing a 3D printer which enables color 3D printing and a method for controlling the 3D printer.

The present invention is directed to providing a 3D printer capable of expressing full colors or substantially full colors by controlling a structural color of photonic crystal particles and a method for controlling the 3D printer.

The present invention is directed to providing a 3D printer capable of rapid color printing at low costs and a method for controlling the 3D printer.

Technical problems of the present invention are not limited to the aforementioned problems, and other technical problems, which are not mentioned above, may be clearly understood by those of ordinary skill in the art to which the present invention pertains from the present specification and the appended drawings.

### [Technical Solution]

One aspect of the present invention provides a print medium for a 3D printing method for fabricating 3D object by depositing a plurality of layers comprising: a main color particle which is provided as a photonic crystal particle whose structural color is defined according to a particle distance, wherein the main color particle expresses a chromatic color according to a reflected light based on the particle distance; a sub color particle having a material color which is an achromatic color; and a curable material provided in a liquid containing the main color particle and the sub color particle, wherein the curable material constitutes the 3D object according to be cured; wherein the main color particle and the sub color particle have opposite electric charges, wherein when an electric force is imparted in a region where the curable material is cured, the structural color of the main color particle or the material color of the sub color particle is selectively used to express the chromatic color and the achromatic color, wherein the chromatic color and the achromatic color is expressed as one of the main color particle or the sub color particle is excluded and the other particle is left.

Another aspect of the present invention provides a print medium for a 3D printing method for fabricating 3D object by depositing a plurality of layers comprising: a main color particle expressing a chromatic color or a first achromatic color, wherein when the mail color particle is arranged in a photonic crystal structure, the chromatic color is expressed with a structural color by reflected light according to a photonic crystal structure, wherein when the main color particle is irregularly arranged, the first achromatic color is expressed with a material color; a sub color particle expressing a second achromatic color with a material color, wherein the second achromatic color is different from the first achromatic color; a curable material provided in a liquid containing the main color particle and the sub color particle, wherein when the curable material is cured, the curable material constitutes the 3D object; wherein when an electric force is imparted in a region where the curable material is cured, the main color particle or the sub color particle is selectively used to express a color, wherein the color is expressed by one of the main color particle and the sub color particle is excluded and the other particle is left.

Another aspect of the present invention provides a 3D printing method for fabricating 3D object by depositing a plurality of layers comprising: preparing a print medium including a main color particle, a sub color particle having a material color, and a curable material of a liquid state, the curable material containing the color particle, wherein the main color particle includes a photonic crystal particle and has a structural color defined according to a particle distance; leaving selectively only one of the main color particle and the sub color particle in a region according to a color of the region to be cured with reference to a 3D modeling data; imparting the color to the print medium using the left particle; and by curing the curable material, fabricating a layer in a state where the color is imparted to the print medium

Another aspect of the present invention provides a 3D printing method for fabricating 3D object by depositing a plurality of layers comprising: preparing a print medium including a main color particle, a sub color particle expressing achromatic color, and a curable material of a liquid state, the curable material containing the color particle, wherein the main color particle includes a photonic crystal particle and has a structural color defined according to a particle distance, and the main color particle is capable of expressing a chromatic color according to the particle distance which is controlled in a magnetic field, wherein the main color particle and the sub color particle have opposite charges each other; loading a 3D modeling data for the 3Dobject, wherein the 3D modeling data includes a layer data for at least one of the plurality of layers, and the layer data includes a shape data having a coordinate to be cured in the layer; preparing a working area for a specific layer of the plurality of layers, wherein the working area is a space having a predetermined thickness inward from a one surface of the print medium; imparting the chromatic color corresponding to the color data to a first region in which the color data is the chromatic color referring to the color data of the layer data for a specific layer, wherein the chromatic color is imparted by excluding the sub color particle in the first region, and controlling a particle distance of the main color particle which is left by applying a magnetic field with an intensity corresponding to the color data; imparting the achromatic color to the color data to a second region in which the color data is the achromatic color referring to the color data of the layer data for a specific layer, wherein the achromatic color is imparted by excluding the main color particle in the second region, leaving the sub color particle, and using the material color of the sub color particle; and fabricating the specific layer by curing the print medium by irradiating the specific layer with light by referring to the shape data of the layer data.

Another aspect of the present invention provides a 3D printing method for fabricating a solid object 3D object by depositing a plurality of layers, The 3D printing method comprising: preparing a print medium including a color particle and a curable material of a liquid state, the curable material containing the color particle, wherein the color particle includes a photonic crystal particle and has a structural color defined according to a particle distance; preparing a 3D modeling data for the 3Dobject, wherein the 3D modeling data includes a layer data for at least one of the plurality of layers, and the layer data includes a shape data having a coordinate to be cured in the layer and a color data having a color value of the coordinate; preparing a working area for a specific layer of the plurality of layers, wherein the working area is a space having a predetermined thickness inward from a one surface of the printing medium; imparting a color to the print medium, wherein the color is imparted by adjusting the structural color of the color particles based on the color value of the color data among the layer data for the specific layer; by curing curable material based on the coordinate of the shape data of the layer data for the specific layer, fixing the color imparted to the print medium and simultaneously fabricating the specific layer.Another aspect of the present invention provides a 3D printer for fabricating 3D object by depositing a plurality of layers comprising: a tank having one of an upper surface or a lower surface is provided in a transparent so as to be a working surface or the upper surface is provided as opened form such that a top surface of a print medium is the working surface, wherein the tank containing a print medium including a color particle and a curable material of a liquid state, the curable material containing the color particle, wherein the color particle includes a photonic crystal particle and has a structural color defined according to a particle distance which is adjusted(controlled) by a magnetic field; a modeling plate provided in the form of a flat plate facing the working surface, for supporting the 3D object; a first transparent film in form of flat plate and a plurality of first electrode arranged in a two-dimensional pixel array on the first transparent film, wherein the first electrode is arranged to face the working surface; a color imparting module for imparting a color to the print medium for each unit area by applying a magnetic field to each unit area of the print medium; a memory for storing modeling data for the solid object; and a controller for controlling the imparted color by controlling a voltage imparted to the plurality of first electrode based on the modeling data to control intensity of the magnetic field.

Another aspect of the present invention provides a method for controlling 3D printer fabricating a 3D object by depositing a plurality of layers, wherein the 3D object is formed by using a print medium including a color particle provided as a photonic crystal particle which has structural color defined according to a particle distance which is adjusted by an electromagnetic field and a curable material containing the color particle, wherein the curable material is provided as liquid state, wherein the 3D printer includes a electrode disposed corresponding to each an unit area of a working surface for fabricating the layer in a two-dimensional pixel array, obtaining a modeling data including a shape data indicating a target area to be cured and a color data indicating a color of the target area for each of the plurality of layers; generating a magnetic field by applying a voltage to each electrode based on the color value of the color data and controlling an intensity of the magnetic field by adjusting the voltage value; imparting the structural color to the print medium according to the intensity of the magnetic field according that the magnetic field is applied to each unit area of the print medium positioned on the working surface; and curing the area imparted with the structural color based on the shape data.

Another aspect of the present invention provides a 3D printer for fabricating 3D object by depositing a plurality of layers comprising: a tank having one surface of an upper surface or lower surface is provided in a transparent so that the one surface is a working surface, or the upper surface is provided as opened form such that a top surface of a print medium is the working surface, wherein the tank containing a print medium including a color particle and a curable material of a liquid state, the curable material containing the color particle, wherein the color particle includes a photonic crystal particle and has a structural color defined according to a particle distance which is determined(adjusted) by a magnetic field; a modeling plate provided in the form of a flat plate facing the working surface, for supporting the 3D object; a memory for storing a modeling data for the solid object; an electromagnet disposed to face the working surface and applying a magnetic field to the print medium positioned on the working surface; and a controller for controlling a voltage applied to the electromagnet based on the modeling data to control an intensity of the magnetic field to control a color imparted to the print medium positioned on the working surface.

Another aspect of the present invention provides a method for controlling 3D printer fabricating a 3D object by depositing a plurality of layers, wherein the 3D object is formed by using a print medium including a color particle provided as a photonic crystal particle which has structural color defined according to a particle distance which is adjusted by an electromagnetic field and a curable material containing the color particle, wherein the curable material is provided as liquid state, wherein the 3D printer including an electromagnet disposed on a back side of a working surface, comprises obtaining a modeling data including a shape data indicating a target area to be cured and a color data indicating a color of the curing target area for each of the plurality of layers; controlling a position of the electromagnet based on a coordinate value of the shape data; applying a voltage to the electromagnet based on a color value of the color data so as to generate a magnetic field and imparting a structural color corresponding to the color value to the print medium, the imparting a structural color is imparted by controlling an intensity of the magnetic field and by controlling the voltage value; and curing the area imparted with the structural color based on the shape data.

Solutions of the present invention are not limited to the aforementioned solutions, and other solutions, which are not mentioned above, may be clearly understood by those of ordinary skill in the art to which the present invention pertains from the present specification and the appended drawings.

### [Advantageous Effects]

According to the present invention, color three-dimensional (3D) printing can be implemented.

According to the present invention, it is possible to impart a color to a print medium in 3D printing by controlling a structural color of photonic crystal particles with an intensity of a magnetic field.

According to the present invention, it is possible to express achromatic colors, which are difficult to express with structural colors, and also impart full colors by adjusting saturation and brightness as well.

According to the present invention, various colors can be expressed on a 3D object in 3D printing.

According to the present invention, it is possible to manufacture a 3D object having various colors by controlling a structural color of photonic crystal particles.

According to the present invention, color 3D printing is possible.

According to the present invention, it is possible to express full colors or substantially full colors in 3D printing by controlling a structural color of photonic crystal particles.

According to the present invention, color 3D printing can be performed in various colors in units of pixels.

According to the present invention, color 3D printing is possible.

According to the present invention, it is possible to express full colors or substantially full colors by controlling a structural color of photonic crystal particles.

According to the present invention, color 3D printing can be rapidly performed at low costs.

Effects of the present invention are not limited to the aforementioned effects, and other effects, which are not mentioned above, may be clearly understood by those of ordinary skill in the art to which the present invention pertains from the present specification and the appended drawings.

### [Description of Drawings]

FIG. 1 is a conceptual diagram of a basic composition of a print medium according to an embodiment of the present invention.
FIG. 2 is a schematic diagram of an example of photonic crystal particles according to an embodiment of the present invention.
FIG. 3 is a schematic diagram of another example of photonic crystal particles according to an embodiment of the present invention.
FIG. 4 shows diagrams of color impartation using a print medium having a basic composition according to an embodiment of the present invention.
FIG. 5 shows diagrams of color control using a print medium having a basic composition according to an embodiment of the present invention.
FIG. 6 shows diagrams of color combination using a print medium having a basic composition according to an embodiment of the present invention.
FIG. 7 is a conceptual diagram of an additional composition of a print medium according to an embodiment of the present invention.
FIG. 8 shows diagrams of color impartation using a structural color of main color particles in a print medium having an additional composition according to an embodiment of the present invention.
FIG. 9 shows diagrams of color impartation using a material color of main color particles in a print medium having an additional composition according to an embodiment of the present invention.
FIG. 10 shows diagrams of color impartation using sub color particles in a print medium having an additional composition according to an embodiment of the present invention.
FIG. 11 is a flowchart illustrating an example of a three-dimensional (3D) printing method according to an embodiment of the present invention.
FIG. 12 is a diagram showing an example of modeling data for color 3D printing according to an embodiment of the present invention.
FIG. 13 is a flowchart illustrating another example of a 3D printing method according to an embodiment of the present invention.
FIG. 14 is a diagram showing an example of color data for color 3D printing according to an embodiment of the present invention.
FIG. 15 shows diagrams of a first form of color application and color fixing in color 3D printing according to an embodiment of the present invention.
FIG. 16 shows diagrams of a second form of color application and color fixing in color 3D printing according to an embodiment of the present invention.
FIG. 17 is a diagram showing modeling data for the second form of color application and color fixing in color 3D printing according to an embodiment of the present invention.
FIG. 18 shows diagrams of a third form of color application and color fixing in color 3D printing according to an embodiment of the present invention.
FIGS. 19 to 21 show diagrams of a fourth form of color application and color fixing in color 3D printing according to an embodiment of the present invention.
FIG. 22 shows diagrams of external color processing in color 3D printing according to an embodiment of the present invention.
FIG. 23 is a block diagram of a color 3D printer according to an embodiment of the present invention.
FIG. 24 is a perspective view of a first implementation example of a color 3D printer according to an embodiment of the present invention.
FIG. 25 is a cross-section view of the first implementation example of a color 3D printer according to an embodiment of the present invention.
FIG. 26 is a cross-section view of a color imparting module and a curing module of the first implementation example of a color 3D printer according to an embodiment of the present invention.
FIG. 27 is a perspective view of the color imparting module of the first implementation example of a color 3D printer according to an embodiment of the present invention.
FIGS. 28 and 29 are cross-section views of a color module in the first implementation example of a color 3D printer according to an embodiment of the present invention.
FIG. 30 is a cross-section view of the curing module of the first implementation example of a color 3D printer according to an embodiment of the present invention.
FIG. 31 is a cross-section view of a second implementation example of a color 3D printer according to an embodiment of the present invention.
FIG. 32 is a cross-section view of a color particle selecting module of the second implementation example of a color 3D printer according to an embodiment of the present invention.
FIG. 33 is a cross-section view of a third implementation example of a color 3D printer according to an embodiment of the present invention.
FIG. 34 is a cross-section view of a modified form of the third implementation example of a color 3D printer according to an embodiment of the present invention.
FIG. 35 is a fourth implementation example of a color 3D printer according to an embodiment of the present invention.

### [Best Mode of the Invention]

Since embodiments disclosed in the present specification are intended to clearly describe the spirit of the present invention to those or ordinary skill in the art to which the present invention pertains, the present invention is not limited to the embodiments described in the present specification, and it should be understood that the scope of the present invention includes changes or modifications without departing from the spirit of the present invention.

For the terminology used in the present specification, general terms are selected which are widely used at present while taking the functions in the present invention into consideration, but it may vary according to the intention of those of ordinary skill in the art to which the present invention pertains, general practices, or the advent of a new technology. Unlike this, when a specific term is defined to have an arbitrary meaning and used, the meaning of the term will be described. Therefore, the terms used in the present specification should be interpreted on the basis of the substantial meanings of the terms and the whole content of the present specification rather than their simple names.

The appended drawings are intended to easily describe the present invention, and shapes shown in the drawings may be exaggerated to help the understanding of the present invention if necessary, and thus the present invention is not limited by the drawings.

In the present specification, detailed descriptions of known configurations or functions related to the present invention which are deemed to obscure the gist of the present invention will be omitted below as necessary.

According to one aspect of the present invention may provide a print medium for a 3D printing method for fabricating 3D object by depositing a plurality of layers comprising: a main color particle which is provided as a photonic crystal particle whose structural color is defined according to a particle distance, wherein the main color particle expresses a chromatic color according to a reflected light based on the particle distance; a sub color particle having a material color which is an achromatic color; and a curable material provided in a liquid containing the main color particle and the sub color particle, wherein the curable material constitutes the 3D object according to be cured; wherein the main color particle and the sub color particle have opposite electric charges, wherein when an electric force is applied in a region where the curable material is cured, the structural color of the main color particle or the material color of the sub color particle is selectively used to express the chromatic color and the achromatic color, wherein the chromatic color and the achromatic color is expressed as one of the main color particle or the sub color particle is excluded and the other particle is left.

Herein, the main color particle may have a structural color which is adjusted based on the particle distance, wherein the particle distance is adjusted according to an intensity of the magnetic field.

Herein, the main color particle may include a magnetic core including a magnetic member and a coupling shell which has a surface charge, wherein when the magnetic field is applied, the particle distance is determined by a collective force which is defined by the magnetic member and a repulsive force which is defined by the coupling shell.

Herein, the magnetic member may include at least one of Fe, Co, Ni, CoCu, CoPt, CoSm, NiFe, NiFeCo, γ-Fe2O3, Fe3O4, CoFe2O4, MnO, MnFe2O4, or BaFe12O19.

Herein, the coupling shell may include at least one of an acrylic polymer including cationic or anionic functional group, a silane-based polymer including cationic or anionic functional group, a titanate-based coupling agent including cationic or anionic functional group, or an aluminate-based coupling agent including cationic or anionic functional group.

Herein, the magnetic core may further include non-magnetic member, the magnetic member is provided as form of coating the non-magnetic member.

Herein, the non-magnetic member may include at least one of SiO₂, Al₂O3, TiO₂, Polystyrene, Polymethylsilsesquioxane, or PMMA.

Herein, the sub color particle may include at least one of ZnO, Al₂O3, or TiO2 having the structural color which is white, or includes at least one of carbon black powder, Fe3O4, orTiO2-x having the structural color which is black.

Herein, the main color particle may include a non-magnetic member, a magnetic member coating the non-magnetic member, and a coupling shell coating the magnetic member, wherein the non-magnetic member and the sub-color particle are provided as same material.

According to one aspect of the present invention may provide a print medium for a 3D printing method for fabricating 3D object by depositing a plurality of layers comprising: a main color particle expressing a chromatic color or a first achromatic color, wherein when the mail color particle is arranged in a photonic crystal structure, the chromatic color is expressed with a structural color by reflected light according to a photonic crystal structure, wherein when the main color particle is irregularly arranged, the first achromatic color is expressed with a material color; a sub color particle expressing a second achromatic color with a material color, wherein the second achromatic color is different from the first achromatic color; a curable material provided in a liquid containing the main color particle and the sub color particle, wherein when the curable material is cured, the curable material constitutes the 3D object; wherein when an electric force is applied in a region where the curable material is cured, the main color particle or the sub color particle is selectively used to express a color, wherein the color is expressed by one of the main color particle and the sub color particle is excluded and the other particle is left.

Herein, when only the main color particle is left in the cured region, the chromatic color and the first achromatic color may be selectively expressed by using selectively the structural color of the main color particle or the material color of the main color particle.

Herein, when only the main color particle is left in the cured region, when the magnetic field is applied, the chromatic color is expressed according to the structural color corresponding to the particle distance which is uniformly determined according to the intensity of the magnetic field, when the magnetic field is not applied, the first achromatic color is expressed, wherein the first achromatic color is the structural color of the main color particle.

According to one aspect of the present invention may provide 3D printing method for fabricating 3D object by depositing a plurality of layers comprising: preparing a print medium including a main color particle, a sub color particle having a material color, and a curable material of a liquid state, the curable material containing the color particle, wherein the main color particle includes a photonic crystal particle and has a structural color defined according to a particle distance; leaving selectively only one of the main color particle and the sub color particle in a region according to a color of the region to be cured with reference to a 3D modeling data; imparting the color to the print medium using the left particle; and by curing the curable material, fabricating a layer in a state where the color is imparted to the print medium..

Herein, the main color particle and the sub color particle have opposite charges to each other, wherein the selectively leaving comprises, applying an electrical force to the region.

Herein, the selectively leaving comprises, with reference to the 3D modeling data
when the color of the region to be cured is the achromatic color, leaving only the sub color particle in the region, when the color of the region to be cured is the chromatic color, leaving only the main color particle in the region and excluding the sub color particle in the region, wherein the imparting the color comprises, when only the sub color particle is left, imparting the material color of the sub color particle to the print medium, and when the main color particle is left imparting the structural color of the main color particle.

Herein, the imparting color comprises controlling the structural color by applying a magnetic field to the print medium and adjusting the particle spacing of the main color particle.

According to one aspect of the present invention may provide 3D printing method for fabricating 3D object by depositing a plurality of layers comprising: preparing a print medium including a main color particle, a sub color particle expressing achromatic color, and a curable material of a liquid state, the curable material containing the color particle, wherein the main color particle includes a photonic crystal particle and has a structural color defined according to a particle distance, and the main color particle is capable of expressing a chromatic color according to the particle distance which is controlled in a magnetic field, wherein the main color particle and the sub color particle have opposite charges each other; loading a 3D modeling data for the 3Dobject, wherein the 3D modeling data includes a layer data for at least one of the plurality of layers, and the layer data includes a shape data having a coordinate to be cured in the layer; preparing a working area for a specific layer of the plurality of layers, wherein the working area is a space having a predetermined thickness inward from a one surface of the print medium; imparting the chromatic color corresponding to the color data to a first region in which the color data is the chromatic color referring to the color data of the layer data for a specific layer, wherein the chromatic color is imparted by excluding the sub color particle in the first region, and controlling a particle distance of the main color particle which is left by applying a magnetic field with an intensity corresponding to the color data; imparting the achromatic color to the color data to a second region in which the color data is the achromatic color referring to the color data of the layer data for a specific layer, wherein the achromatic color is imparted by excluding the main color particle in the second region, leaving the sub color particle, and using the material color of the sub color particle; and fabricating the specific layer by curing the print medium by irradiating the specific layer with light by referring to the shape data of the layer data.

According to one aspect of the present invention may provide 3D printing method for fabricating a solid object 3D object by depositing a plurality of layers, The 3D printing method comprising: preparing a print medium including a color particle and a curable material of a liquid state, the curable material containing the color particle, wherein the color particle includes a photonic crystal particle and has a structural color defined according to a particle distance; preparing a 3D modeling data for the 3Dobject, wherein the 3D modeling data includes a layer data for at least one of the plurality of layers, and the layer data includes a shape data having a coordinate to be cured in the layer and a color data having a color value of the coordinate; preparing a working area for a specific layer of the plurality of layers, wherein the working area is a space having a predetermined thickness inward from a one surface of the printing medium; imparting a color to the print medium, wherein the color is imparted by adjusting the structural color of the color particles based on the color value of the color data among the layer data for the specific layer; by curing the curable material based on the coordinate of the shape data of the layer data for the specific layer at a time, fixing the color imparted to the print medium and fabricating the specific layer simultaneously. Herein, the color particle may include a magnetic core provided as a magnetic member and a coupling shell which is provided in a form of coating the magnetic core has a surface charge, wherein the imparting a color comprises, applying a magnetic field to the print medium at an intensity corresponding to the color value to control the particle distance so that the color particle has the structural color corresponding to the color value.

Herein the magnetic member may include at least one of Fe, Co, Ni, CoCu, CoPt, CoSm, NiFe, NiFeCo, γ-Fe₂O₃, Fe3O4, CoFe₂O₄, MnO, MnFe₂O₄, or BaFe₁₂O₁₉.

Herein, the coupling shell may include at least one of an acrylic polymer including cationic or anionic functional group, a silane-based polymer including cationic or anionic functional group, a titanate-based coupling agent including cationic or anionic functional group, or an aluminate-based coupling agent including cationic or anionic functional group.

Herein, the magnetic core may further include non-magnetic member, the magnetic member is provided as form of coating the non-magnetic member.

Herein, the non-magnetic member may include at least one of SiO₂, Al₂O3, TiO₂, Polystyrene, Polymethylsilsesquioxane, or PMMA.

Herein, in the imparting the color, so that the color corresponding to the color value of the color data is assigned to an each of a portion corresponding to the coordinate of the shape data through a whole region of a specific layer with reference to the shape data and color data, and wherein in the fabricating the specific layer, curing the each of the portion in a state in which the color is imparted to the each of the portion corresponding to the coordinate.

Herein, in the imparting the color, the imparting may be performed to the whole region of the specific layer comprehensively, wherein in the fabricating the specific layer, the curing is performed to on the coordinate selectively, wherein the coordinate has the specific color value with reference to the shape data in a state in which the specific color value is imparted through whole region of the specific layer, fabricating the specific layer by repeating the imparting the color corresponding to the specific color value and the curing selectively only the coordinate having the specific color value.

Herein, the imparting the color may comprise, determining the coordinate having a specific color value included in the color data of a whole region of the specific layer with reference to the shape data and imparting the specific color value to the determined coordinate, wherein the fabricating the specific layer comprises, curing selectively only the determined coordinate, and with respect to the all of the color value included in the color data, fabricating the specific layer by repeating the determining, the imparting the specific color value, and the curing selectively.

Herein, classifying the coordinate of the shape data to a predetermined number of a coordinate group may be included, wherein the coordinate group is a set of the coordinate spaced part from each other, wherein the imparting the color comprises imparting the color to the portion corresponding to the coordinate included in a specific coordinate group of the coordinate group of the specific layer, wherein the fabricating the specific layer comprises curing selectively the portion imparted the color, and with respect to the all of the color value included in the color data, fabricating the specific layer by repeating the imparting the color to the portion corresponding to the coordinate included in the specific coordinate group, and the curing selectively the portion imparted the color.

Herein, the coordinate included in the coordinate group may be composed of the coordinate in the diagonal direction with respect to each other.

Herein, the imparting the color may comprise when the color value is the chromatic color, controlling the particle distance so that a reflected light corresponding to the particle distance of the photonic crystal particle corresponds to a chromatic color.

Herein, the color particle may have structural color which is an achromatic color, wherein the imparting the color comprises imparting the color to a material color instead of the structural color of the color particle such that the photonic crystal particle has irregular the particle distance if the color value is the achromatic color.

Herein, imparting the color comprises when the color is an achromatic color, dividing a region to be imparted the achromatic color to a sub-region, and imparting a chromatic color, the chromatic color is combination representing the achromatic color to each of the subregion.

According to one aspect of the present invention may provide 3D printer for fabricating 3D object by depositing a plurality of layers comprising: a tank having one of an upper surface or a lower surface is provided in a transparent so as to be a working surface or the upper surface is provided as opened form such that a top surface of a print medium is the working surface, wherein the tank containing a print medium including a color particle and a curable material of a liquid state, the curable material containing the color particle, wherein the color particle includes a photonic crystal particle and has a structural color defined according to a particle distance which is adjusted by a magnetic field; a modeling plate provided in the form of a flat plate facing the working surface, for supporting the 3D object; a first transparent film in form of flat plate and a plurality of first electrode arranged in a two-dimensional pixel array on the first transparent film, wherein the first electrode is arranged to face the working surface; a color imparting module for imparting a color to the print medium for each unit area by applying a magnetic field to each unit area of the print medium; a memory for storing modeling data for the solid object; and a controller for controlling the imparted color by controlling a voltage applied to the plurality of first electrode based on the modeling data to control intensity of the magnetic field.

Herein, the modeling data includes a shape data indicating the unit area to be cured in the layer and a color data indicating a color to be given to the unit area to be cured, wherein the controller controls the voltage applied to the plurality of the first electrode based on the color data and adjusts the imparted color for each the unit area to be cured.

Herein, the plurality of first electrode is an ITO transparent electrode.

Herein, the first transparent film includes a 1-1 transparent film and a 1-2 transparent film opposed to each other, and the plurality of first electrode includes a plurality of 1-1 electrode arranged on the 1-1 transparent film in a two-dimensional pixel array, and a plurality of 1-2 electrode arranged on the 1-2 transparent film, and the plurality of 1-1 electrode and the plurality of 1-2 electrode are arranged to face each other.

Herein, the plurality of first electrode may include a common electrode disposed in a two-dimensional pixel array on the first transparent film and a ground electrode disposed on the transparent film in a pair with the common electrode.

Herein, the 1-1 electrode and the 1-2 electrode are disposed on a surface of the first transparent film facing the working surface.

Herein, further comprising, a curing module for fabricating the layer by curing the print medium located on the working surface.

Herein, the curing module may include a light source that emits a light and a light irradiation control unit that controls a position where the emitted light is irradiated onto the working surface, wherein the light irradiation control unit includes a pair of second transparent films provided in form of flat plate, a plurality of second electrodes arranged in a two-dimensional pixel array on the second transparent film, and a liquid crystal layer disposed between the second transparent film, wherein the liquid crystal layer transmits or non-transmits the light by the second electrode so that print medium which is disposed between the light source and the working surface is cured by the unit area, and the controller includes a controller for controlling voltages applied to the plurality of second electrodes based on the modeling data,

Herein, the light irradiation control unit may be disposed on a back surface of the color imparting module.

Herein, the modeling data may include a shape data indicating a unit area to be cured in the layer, the controller controls a voltage applied to the plurality of second electrodes so that the light is irradiated only on the unit area to be cured based on the shape data.

Herein, the curing module may include a light source that emits light in the working surface direction and a light irradiating controller that moves the light source in two dimensions in a direction parallel to the working surface, and the controller controls the on/off of the light source and the irradiation position of the light by the light irradiating controller based on the modeling data so that the light is irradiated on to the region imparted color and the print medium is cured and the color is fixed.

Herein, the curing module may include a light source for emitting the light, a reflecting mirror for reflecting the emitted light in the direction of the working surface, and an angle adjusting unit for adjusting a reflecting angle roll of the reflecting mirror, and the controller controls the on/off of the light source and the irradiation position of the light by the light irradiating controller based on the modeling data so that the light is irradiated on to the region imparted color and the print medium is cured and the color is fixed.

Herein, further comprising, a curing module including a light source emitting light in the working surface direction and a liquid crystal layer positioned on a back surface of the color imparting module, wherein the light source is positioned in a opposite to the working surface on the basis of the color imparting module, wherein the modeling data includes a shape data indicating a unit area to be cured in the layer and color data indicating a color to be given to the unit area to be cured; wherein the controller controls the color to be imparted the print medium, and after the color is imparted cures the print medium which is imparted the color to each unit area by controlling light transmission of the liquid crystal layer of each unit area, wherein the color is controlled by controlling a voltage value applied to the first electrode based on the color data in state wherein the color is imparted by controlling on/off of a voltage applied to the first electrode based on the shape data in state where the light source is turned on,

According to one aspect of the present invention may provide the method for controlling 3D printer fabricating a 3D object by depositing a plurality of layers, wherein the 3D object is formed by using a print medium including a color particle provided as a photonic crystal particle which has structural color defined according to a particle distance which is adjusted by an electromagnetic field and a curable material containing the color particle, wherein the curable material is provided as liquid state, wherein the 3D printer includes a electrode disposed corresponding to each an unit area of a working surface for fabricating the layer in a two-dimensional pixel array, obtaining a modeling data including a shape data indicating a target area to be cured and a color data indicating a color of the target area for each of the plurality of layers; generating a magnetic field by applying a voltage to each electrode based on the color value of the color data and controlling an intensity of the magnetic field by adjusting the voltage value; imparting the structural color to the print medium according to the intensity of the magnetic field according that the magnetic field is applied to each unit area of the print medium positioned on the working surface; and curing the area imparted with the structural color based on the shape data.

According to one aspect of the present invention may provide 3D printer for fabricating 3D object by depositing a plurality of layers comprising: a tank having one surface of an upper surface or lower surface is provided in a transparent so that the one surface is a working surface, or the upper surface is provided as opened form such that a top surface of a print medium is the working surface, wherein the tank containing a print medium including a color particle and a curable material of a liquid state, the curable material containing the color particle, wherein the color particle includes a photonic crystal particle and has a structural color defined according to a particle distance which is determined by a magnetic field; a modeling plate provided in the form of a flat plate facing the working surface, for supporting the 3D object; a memory for storing a modeling data for the solid object; an electromagnet disposed to face the working surface and applying a magnetic field to the print medium positioned on the working surface; and a controller for controlling a voltage applied to the electromagnet based on the modeling data to control an intensity of the magnetic field to control a color imparted to the print medium positioned on the working surface

Herein, further comprising, an electromagnet moving unit for moving the electromagnet on a two-dimensional plane parallel to the working surface, wherein the controller controls a position of the electromagnet based on the modelling data to control an area where the color is imparted.

Herein, the modelling data may include shape data indicating an area to be cured in the layer and color data indicating a color to be given to the area to be cured, wherein the controller places the electromagnet in the area to be cured using the electromagnet moving unit and controls a voltage value applied to the electromagnet based on the color data.

Herein, further comprising, a curing module for fabricating the layer by curing the print medium located on the working surface.

Herein, the curing module may include a light source that emits light and a light irradiation control unit that controls a position where the emitted light is irradiated onto the working surface, wherein irradiation control unit includes a pair of transparent film provided in a flat plate shape, a plurality of electrode arranged in a two-dimensional pixel array on the transparent film, and a liquid crystal layer disposed between the transparent films, and cures each unit area of the print medium by using the light transmitted or not transmitted through the liquid crystal layer by the electrode, and wherein the controller includes controller for controlling voltages applied to the plurality of electrodes based on the modeling data.

Herein, the light irradiation control unit may be positioned between the electromagnet and the working surface.

Herein, the modeling data may include a shape data indicating the unit area to be cured in the layer, wherein the controller controls a voltage applied to the plurality of electrodes so that the light is irradiated only on the unit area to be cured based on the shape data.

Herein, in the electromagnet, a hole may be formed, wherein the curing module includes a light source attached to an opposite side of the working surface with respect to the electromagnet, wherein the light source emits light in the direction of the working surface through the hole, wherein the controller controls the light source to cure the print medium by irradiating the light onto an area to which the color is given by the light source when the color is imparted to the print medium based on the modeling data.

Herein, curing module may include a light source for emitting the light, a reflecting mirror for reflecting the emitted light in the direction of the working surface, and a light angle adjusting unit for adjusting a reflecting angle of the reflecting mirror, wherein the controller adjusts the on/off state of the light source and the reflecting angle of the light angle adjusting unit so that curing and fixing of the color of the print medium are performed, wherein the curing and fixing are performed by adjusting a irradiation point of the light.

According to one aspect of the present invention may provide the method for controlling 3D printer fabricating a 3D object by depositing a plurality of layers, wherein the 3D object is formed by using a print medium including a color particle provided as a photonic crystal particle which has structural color defined according to a particle distance which is adjusted by an electromagnetic field and a curable material containing the color particle, wherein the curable material is provided as liquid state, wherein the 3D printer including an electromagnet disposed on a back side of a working surface, comprises obtaining a modeling data including a shape data indicating a target area to be cured and a color data indicating a color of the curing target area for each of the plurality of layers; controlling a position of the electromagnet based on a target value of the shape data; applying a voltage to the electromagnet based on a color value of the color data so as to generate a magnetic field and imparting a structural color corresponding to the color value to the print medium, the imparting a structural color is imparted by controlling an intensity of the magnetic field and by controlling the voltage value; and curing the area imparted with the structural color based on the shape data.

### I. Print medium

The concept of a print medium 100 according to an embodiment of the present invention will be described below.

### 1. Application field

In the present invention, the print medium 100 denotes a material constituting a three-dimensional (3D) object M in 3D printing. According to a used material, 3D printing technology may be classified into three types given below.
i) Photocuring process: a photocurable liquid material (e.g., an ultraviolet (UV)-curing resin) which is cured by specific light is used, and this manner corresponds to PolyJet of Stratasys, Inc.
ii) Sintering process: laser is radiated to a powder material which is cured at a specific temperature, and this manner corresponds to selective laser sintering (SLS) and directive metal laser sintering (DMLS).
iii) Fused deposition modeling (FDM): a thermoplastic resin is melt at a specific temperature or above and then cooled down, a material in a filament form is mostly discharged through a heated nozzle to form a desired shape, and poly-lactic acid (PLA) and acrylonitrile butadiene styrene (ABS) are used.

In the present invention, the print medium 100 is a material used in the photocuring process among the aforementioned 3D printing methods. An apparatus used in the photocuring process is referred to as a stereolithography apparatus (SLA), and for this reason, the photocuring process is also referred to as an SLA method.

In the present invention, the print medium 100 is prepared as a liquid in a tank 1100 of a photocuring-type 3D printer 1000, and an outer surface thereof is irradiated by light and cured to form a layer L constituting the 3D object M. Here, the print medium 100 includes a photocurable material 120' and forms the layer L when the photocurable material 120' is irradiated and cured. Such generation of the layer L and deposition of the generated layer L are repeated to form the 3D object M, so that 3D printing using the print medium 100 according to an embodiment of the present invention is completed.

### 2. Color 3D printing

When the print medium 100 according to an embodiment of the present invention is used in 3D printing, colors are expressed at will, and thus color 3D printing is possible.

In general, conventional 3D printing technologies make it possible to express only a single color or colors in only a limited form. For example, in the case of the SLA or SLS method, the 3D object M can have only a single color according to an original color of a material thereof. In the case of FDM, filaments having different colors are used together, and it is possible to restrictively manufacture the multi-color 3D object M. However, to this end, it is necessary to provide filaments according to colors, and filament colors are not sufficiently varied. Therefore, color expressions are restricted.

Such a restriction on color expressions in conventional 3D printing results from characteristics of the 3D printing technologies in which the 3D object M is formed by curing or solidifying a material in units of layers L and depositing the layers L because it is difficult to simultaneously use several materials and a color of the material itself, that is, a material color, is directly imparted as a color of the 3D object M.

On the other hand, a color may be imparted to the print medium 100 according to an embodiment of the present invention before or while the print medium is cured by light irradiation during an SLA 3D printing process. Specifically, the print medium 100 according to an embodiment of the present invention includes photonic crystal particles 140', and in 3D printing, a particle distance D between the photonic crystal particles 140' is controlled to adjust a structural color of the photonic crystal particles 140' and impart a color to the print medium 100.

### 3. Basic composition of print medium

A basic composition of the print medium 100 according to an embodiment of the present invention will be described below.

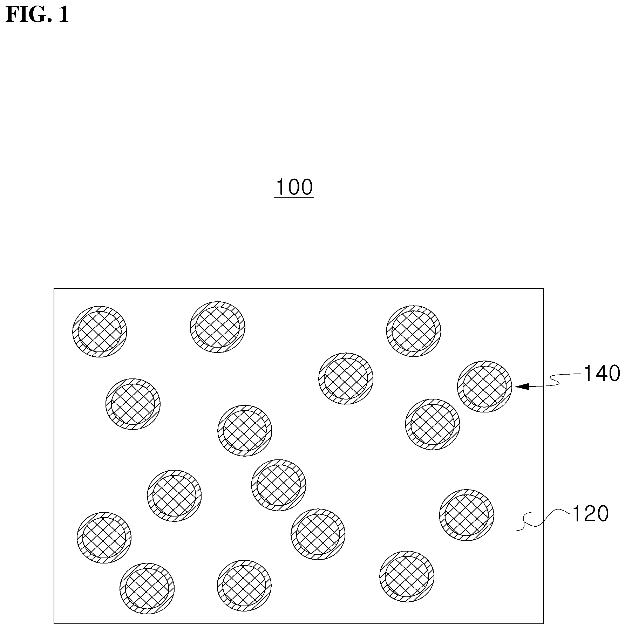

FIG. 1 is a conceptual diagram of a basic composition of the print medium 100 according to an embodiment of the present invention.

Referring to FIG. 1, the print medium 100 according to an embodiment of the present invention may include a curable material 120 and main color particles 140.

### 1) Curable material

In 3D printing, the curable material 120 is cured and causes the print medium 100 to form the layers L of the 3D object M. To this end, the curable material 120 has the property of being cured from a liquid state to a solid state under a specific condition. For example, the curable material 120 may include a material involving a curing process according to a chemical change process caused by light, such as UV rays, visible light, or the like, or a temperature change.

A typical example of the curable material 120 is a UV resin which is a kind of the photocurable material 120' and cured by UV light. Generally, in SLA 3D printing, a process of preparing a printing material including the UV resin in the tank 1100 and then radiating UV light to generate the layer L constituting the 3D object M in a form to be cured is performed. Here, the UV resin serves to fix the shape of the layer L.

Needless to say, in the present invention, the curable material 120 is not limited to the photocurable material 120' or the UV resin and should be interpreted as encompassing a thermal curing material and a material having a property of being cured from a liquid state to a solid state under another condition.

Also, the curable material 120 may serve to fix a color expressed by the main color particles 140, that is, a color imparted to the print medium 100.

Specifically, color fixing is performed as follows. When the main color particles 140 are arranged in a specific array structure by an external factor (e.g., a magnetic field or the like), the main color particles 140 express a color corresponding to the array structure as will be described below. At this time, when the curable material 120 is cured, the array structure of the main color particles 140 does not collapse and is maintained even without the external factor. Accordingly, the color of the print medium 100 is fixed by the main color particles 140.

### 2) Main color particles

The main color particles 140 may be provided as the photonic crystal particles 140' whose structural color is defined according to an array structure. For example, the photonic crystal particles 140' may reflect only light of a wavelength corresponding to a distance therebetween, that is, the particle distance D. Accordingly, the print medium 100 may have a color corresponding to a reflected wavelength as a structural color. As a result, the main color particles 140 may impart a color to the print medium 100 by expressing the color using a structural color thereof.

To show a color in the visible light region, the photonic crystal particles 140' may have a particle size of 50 nm to 2000 nm, and a deviation of particle size may be less than 10%. More preferably, the photonic crystal particles 140' may have a particle size of 180 nm to 550 nm, and a deviation of particle size may be less than 10%.

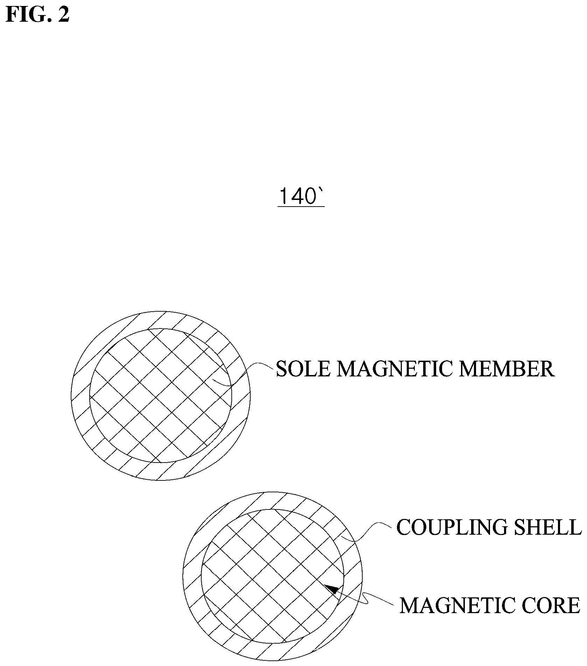

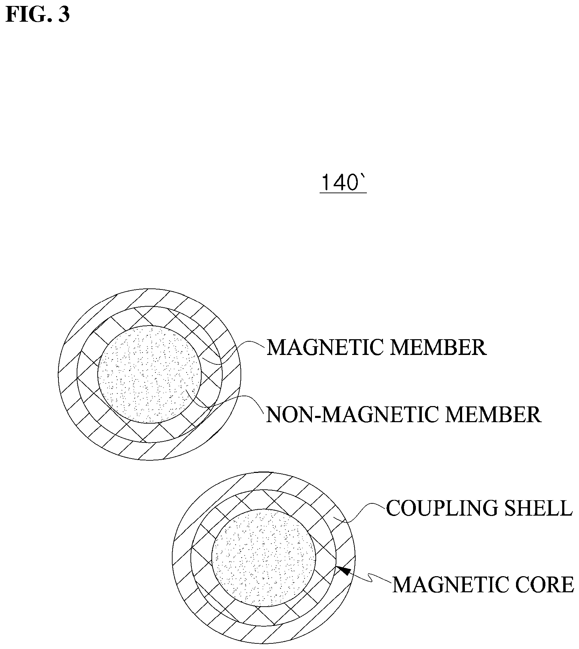

FIG. 2 is a schematic diagram of an example of the photonic crystal particles 140' according to an embodiment of the present invention, and FIG. 3 is a schematic diagram of another example of the photonic crystal particles 140' according to an embodiment of the present invention.

The photonic crystal particles 140' may include magnetic cores 142 and coupling shells 144. A magnetic field may be applied on the photonic crystal particles 140' so that the photonic crystal particles 140' may be self assembled in an array structure having the desired particle distance D. The photonic crystal particles 140' disposed at the specific particle distance D show a structural color corresponding to the particle distance D, and as a result, a color may be imparted to the print medium 100.

Specifically, self-assembly of the photonic crystal particles 140' may be performed as follows.

A magnetic core 142 is usually in the form of a core of a photonic crystal particle 140' and has magnetism. Therefore, when a magnetic field is applied, the magnetic core 142 reacts and is pulled toward the magnetic field. A coupling shell 144 is usually in the form of a shell surrounding the magnetic core 142 and has surface charge.

Accordingly, in a magnetic field, the magnetic cores 142 of the photonic crystal particles 140' are pulled toward the magnetic field, and thus the photonic crystal particles 140' are gathered. At this time, the photonic crystal particles 140' are self assembled at the predetermined particle distance D apart due to an electric repulsive force caused by surface charge of the coupling shells 144.

Here, the particle distance D is determined to be a distance at which a force of the magnetic field pulling the magnetic cores 142 balances with the repulsive force of the coupling shells 144, and thus may be determined according to an intensity of the magnetic field. As a result, a color of the print medium 100 can be controlled by adjusting the intensity of the magnetic field applied to the photonic crystal particles 140'.

The magnetic core 142 may be mostly implemented as magnetic nanoparticles of several or hundreds of nanometers. The magnetic nanoparticles may be implemented in a form in which a magnetic member 142a solely constitutes a magnetic core 142 as shown in FIG. 2 or a non-magnetic member 142b is coated with a magnetic member 142a as shown in FIG. 3.

As the magnetic member 142a, a magnetic material or a magnetic alloy may be used. Examples of the magnetic material or the magnetic alloy may be metals, such as Fe, Co, Ni, and the like, alloys thereof (e.g., CoCu, CoPt, CoSm, NiFe, NiFeCo, and the like), oxides thereof, such as χ-Pe203, Fe304, CoFe204, MnO, MnFe204, BaFe12019, and the like, and mixtures thereof.

As the non-magnetic member 142b, a metal oxide, such as SiO₂, Al₂O₃, TiO₂, and the like, or an organic material, such as polystyrene, polymethylsilsesquioxane, polymethyl methacrylate (PMMA), and the like, may be used. Non-magnetic members 142b may be usually provided in the form of a spherical member, and a surface there of may be coated with the magnetic member 142a.

Magnetic nanocores may be manufactured to have the superparamagnetic property to improve reactivity according to a magnetic field, that is, to facilitate control of an array structure of the photonic crystal particles 140'.

Most ferromagnetic materials are phase-changed into superparamagnetic materials when sizes of their particles become several to hundreds of nanometers. General ferromagnetic materials which acquire magnetism due to a magnetic field maintain magnetism even when the magnetic field is removed, whereas a superparamagnetic material maintains magnetism only under the influence of an external magnetic field and loses magnetism when the magnetic field is removed.

Therefore, when the superparamagnetic property is used, the particle distance D between the photonic crystal particles 140' can be easily controlled according to an intensity of a magnetic field, and applying a desired color to the print medium 100 may be facilitated.

The coupling shells 144 coat the surfaces of the magnetic cores 142 with a coupling agent. As the coupling agent, an acrylic polymer including a cationic or anionic functional group, a silane-based polymer including a cationic or anionic functional group, a titanate-based coupling agent including a cationic or anionic functional group, an aluminate-based coupling agent include ing a cationic or anionic functional group, or the like may be used. The coupling shells 144 have an electrical polarity and thus repulse each other. For this reason, a repulsive force arises between the photonic crystal particles 140'. For example, when an acrylic polymer derived from (meta)acrylic acid including a carboxyl group is used, the surfaces of the photonic crystal particles 140' may be negatively charged, and when an acrylic polymer derived from an N-methylaminoethyl (meta)acrylate including an amino group is used, the surfaces of the photonic crystal particles 140' may be positively charged.

Meanwhile, materials of the magnetic member 142a, the non-magnetic member 142b, and the coupling shell 144 are not limited to the aforementioned examples, and other materials which function in similar ways to the examples may also be used.

The print medium 100 according to a basic composition of the present invention may be produced as follows.

First, in production of the photonic crystal particles 140', 250nm monodispersed spherical silicon dioxide particles of 80g produced in the Stober-Fink-Bohn method is immersed in 2L deionized water and then subjected to ultrasonic dispersion for 30 minutes. Subsequently, the dispersed solution of spherical silicon dioxide is moved to a 5L glass reactor in which the dispersed solution can be stirred, and nitrogen is introduced at a rate of 1L/min to remove oxygen.

5ml Fe(NO₃)₃ solution (obtained by dissolving 10g Fe(NO₃)₃-9H₂O per 100g deionized water) is added to the dispersed solution, and then the dispersed solution is heated to 80°C. After that, 15wt% KOH solution is introduced for 20 minutes to make pH 7.0, and the dispersed solution maintain in a stirred state for 30 minutes.

Subsequently, while pH is being maintained using 15wt% KOH solution, 600g FeSO₄ solution (obtained by dissolving 300g FeSO₄-7H₂O in 1000g deionized water) is introduced at a rate of 0.5ml/min to coat the monodispersed spherical silicon dioxide particles with Fe₃O₄.

After the introduction is completed, the dispersed solution is stirred for 30 minutes, repeatedly dehydrated and rinsed with deionized water to remove residual salts, and then dried at 120°C for 12 hours to produce monodispersed spherical silicon dioxide particles coated with Fe₃O₄. Subsequently, the monodispersed spherical silicon dioxide particles coated with Fe₃O₄ are dispersed in 1L anhydrous ethanol, 10g 3-methacryloxypropyl triethoxysilane is introduced, and then the solution is stirred for 30 minutes. After that, the solution is filtered and then dried at 70°C for 6 hours to produce the photonic crystal particles 140' in black.

### 3) Color impartation

Using the basic composition of the print medium 100 described above, it is possible to impart a color in the print medium 100.

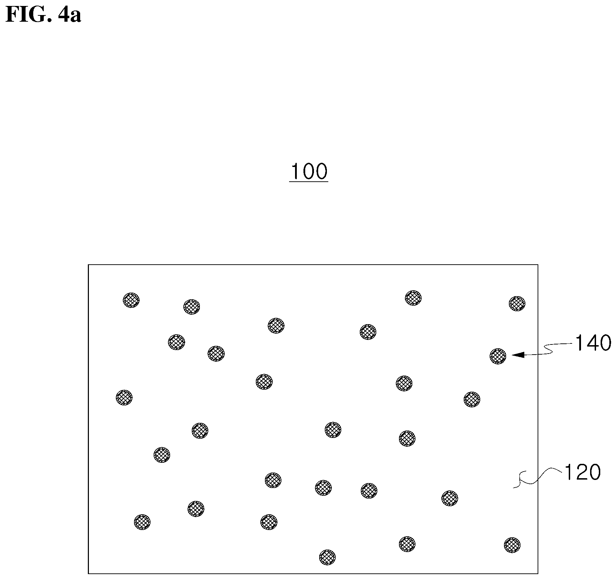

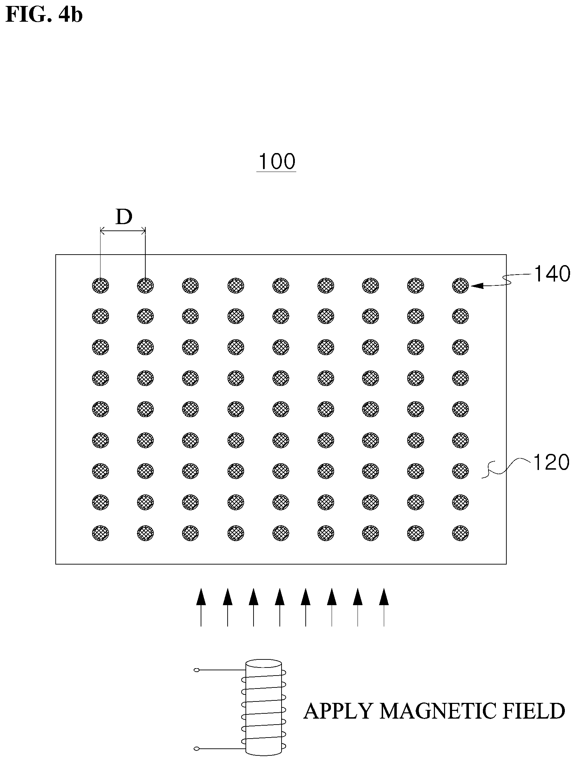

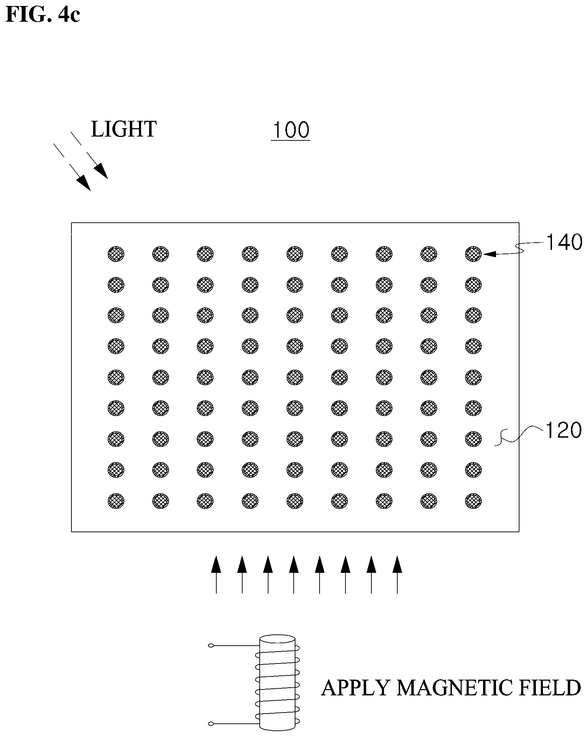

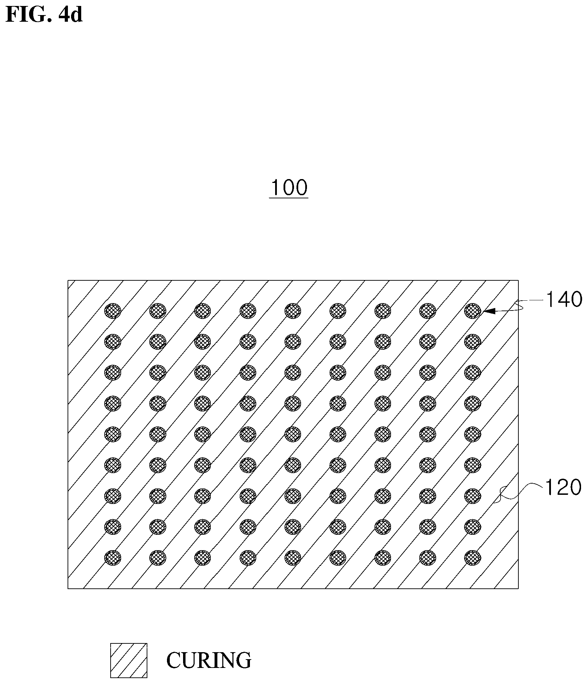

FIG. 4 shows diagrams of color impartation using the print medium 100 having a basic composition according to an embodiment of the present invention.

As shown in FIG. 4(a), the print medium 100 having the basic composition is prepared in a form in which the main color particles 140 are dispersed in the curable material 120. Since no magnetic field has been applied yet, the particle distance D between the main color particles 140 varies. When a magnetic field is applied to the print medium 100, the main color particles 140 may be uniformly disposed at the specific particle distance D as shown in FIG. 4(b) by a magnetic force applied to the magnetic cores 142 and an electric repulsive force of the couplifng shells 144.

When the main color particles 140 are disposed in this way, the main color particles 140 show a structural color according to the particle distance D between the photonic crystal particles 140', and thus a color may be imparted to the print medium 100.

When the curable material 120 is cured by radiating light or heat to the print medium 100 with the color imparted to the print medium 100, the disposition of the main color particles 140 is fixed as shown in FIG. 4(c), and thus the color imparted to the print medium 100 may be fixed. Subsequently, even when the magnetic field is removed, the print medium 100 may maintain the fixed color as shown in FIG. 4(d) because the curable material 120 has been sufficiently cured already.

It is possible to control a color of the print medium 100 by adjusting an intensity of the magnetic field in the process of imparting a color as described above with reference to FIG. 4. Using the intensity of the magnetic field, various colors can be imparted to the print medium 100.

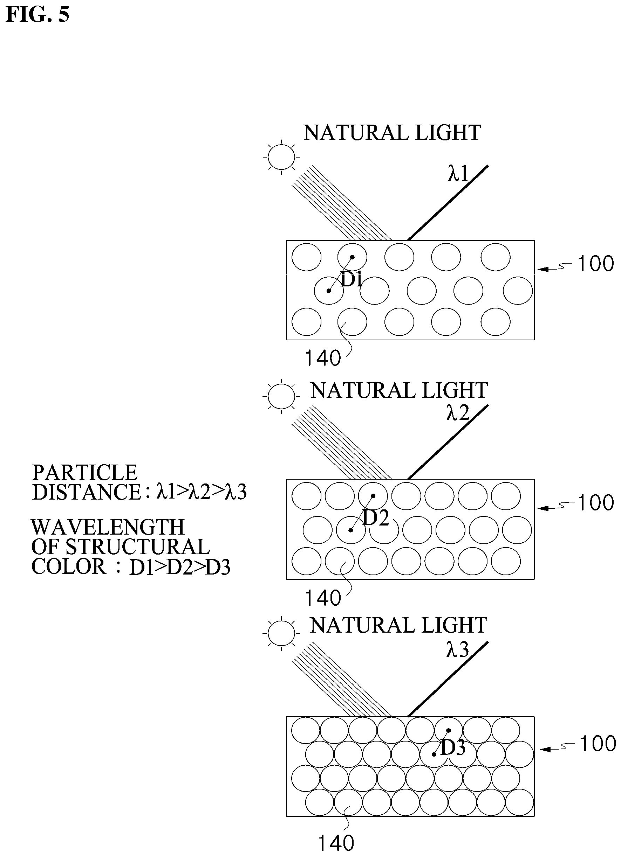

FIG. 5 shows diagrams of color control using the print medium 100 having a basic composition according to an embodiment of the present invention.

Basically, a color imparted to the print medium 100 is defined as a structural color according to the particle distance D between the main color particles 140, and the particle distance D between the main color particles 140 is defined to be a distance at which a force of aggregating the main color particles 140 due to the magnetic cores 142 balances with the repulsive force of the coupling shells 144 between the main color particles 140.

Here, the surface charge amounts of the coupling shells 144 are maintained almost uniformly, and thus it is possible to increase or reduce the particle distance D between the main color particles 140 by increasing or reducing the intensity of the magnetic field. Specifically, when the intensity of the magnetic field is increased, the particle distance D is reduced, and conversely, when the intensity of the magnetic field is reduced, the particle distance D is increased. A color imparted to the print medium 100 is determined to be a structural color according to a wavelength of reflected visible light corresponding to the particle distance D of the main color particles 140. As a result, when the intensity of the magnetic field is gradually increased, the particle distance D of the photonic crystal particles 140' is reduced in order of (a), (b), and (c) of FIG. 5, and colors from red colors to purple colors can be imparted in the print medium 100.

Meanwhile, only chromatic colors from red to purple can be imparted with single-band visible light, but a color may be combined in a macroscopic view to express an achromatic color by giving different particle distances D to unit areas of the print medium 100, or even color attributes, such as saturation and brightness, may be controlled to impart various colors with the print medium 100.

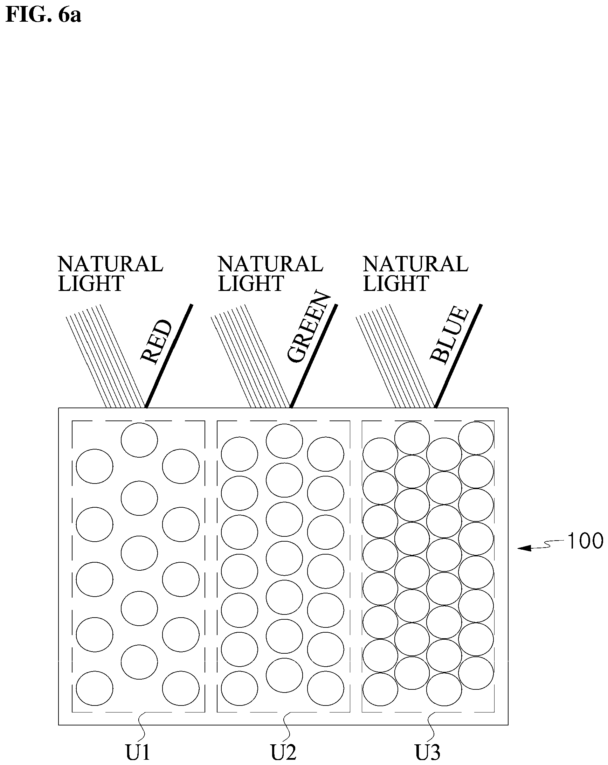

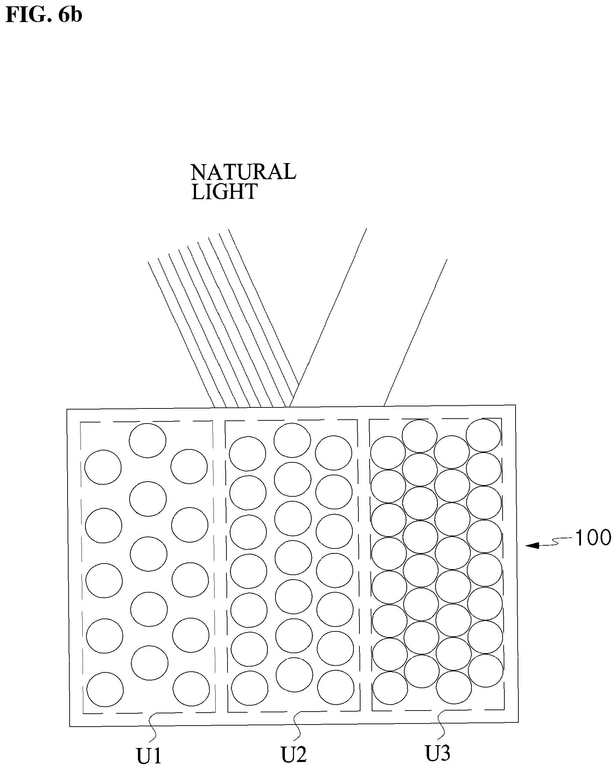

FIG. 6 shows diagrams of color combination using the print medium 100 having a basic composition according to an embodiment of the present invention.

Referring to FIG. 6 as an example of color combination, the print medium 100 is divided into a first unit area U1, a second unit area U2, and a third unit area U3 at a microscopic level. The main color particles 140 are disposed at a particle distance D corresponding to red in the first unit area U1, at a particle distance D corresponding to green in the second unit area U2, and at a particle distance D corresponding to blue in the third unit area U3. The print medium 100 having this array structure has red, green, and blue colors according to unit areas in a microscopic view as shown in FIG. 6(a) but may have a white color in a macroscopic view as shown in FIG. 6(b).

### 4. Additional composition of print medium

An additional composition of the print medium 100 according to an embodiment of the present invention will be described below.

As described above, the print medium 100 having the basic composition according to an embodiment of the present invention basically imparts a color with a structural color using a visible light region reflected according to a photonic crystal array structure of the main color particles 140. Therefore, the print medium 100 has a predetermined restriction on imparting achromatic colors or imparting full colors by comprehensively controlling saturation, brightness, and the like.

Needless to say, it is possible to compose a color by individually controlling the particle distance D between the main color particles 140 according to unit areas of the print medium 100. However, to impart this technique to 3D printing technology, it is required to accurately impart and fix a color according to the unit areas. Therefore, the production cost of the 3D printer 1000 increases, and it is highly likely that the production time of the whole 3D object M increases.

Consequently, an additional composition of the print medium 100 according to an embodiment of the present invention may further include sub color particles 160 in addition to the basic composition. Here, the sub color particles 160 denote particles imparting a color which is difficult to express with only a single structural color of the main color particles 140 to the print medium 100.

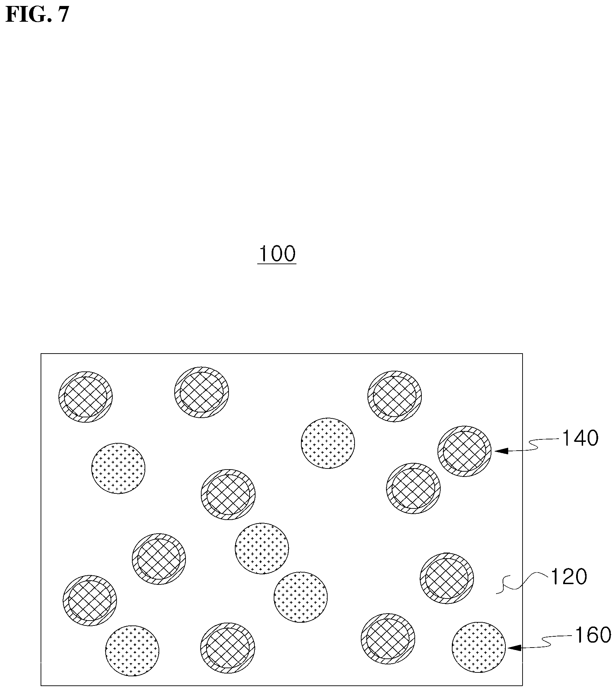

FIG. 7 is a conceptual diagram of an additional composition of the print medium 100 according to an embodiment of the present invention.

### 1) Sub color particles

Considering the aforementioned aspects, it is preferable to select a material having an achromatic color as the sub color particles 160. For example, a white, grey, or black material may be selected as the sub color particles 160.

Needless to say, the sub color particles 160 are not necessarily limited to a material having an achromatic color.

As an example, when a main color of the 3D object M to be 3D-printed is determined, it is necessary to repeat a color imparting and color fixing process to express the main color with the main color particles 140, and this is highly likely to take much time. Therefore, in this case, it may be advantageous to select a material showing the main color of the 3D object M as the sub color particles 160.

As another example, when it is difficult to express a specific chromatic color as a structural color by controlling a magnetic field, a material having the color which is difficult to express may be selected as the sub color particles 160. In other words, when it is intended to express red or purple as a single structural color, the particle distance D should be the maximum or minimum, and accordingly, the magnetic field should have the maximum or minimum intensity to express red or purple. However, when it is difficult to control the intensity of the magnetic field in this manner, a red or purple material may be prepared as the sub color particles 160.

Further, it is unnecessary to select only one kind of material as the sub color particles 160. In case of necessity, for example, two kinds of materials which are black and white may be prepared as the sub color particles 160.

Moreover, a material type of the main color particles 140 may be additionally taken into consideration to select the sub color particles 160. For example, when the magnetic cores 142 of the main color particles 140 include the magnetic members 142a and the non-magnetic members 142b, the main color particles 140 from which the magnetic members 142a are removed, that is, the non-magnetic members 142b, may be used as the sub color particles 160.

In this case, the sub color particles 160 can be easily produced by simply excluding a process of coating or plating the non-magnetic members 142b with the magnetic members 142a from the production process of the main color particles 140, thus resulting in a gain in process.

Here, metal oxides, such as ZnO, Al₂O₃, TiO₂, carbon black powder, Fe₃O₄, TiO₂₋ₓ, zinc oxide, and the like, may be used as the sub color particles 160. For example, when ZnO, Al₂O₃, TiO₂, and the like are used as the sub color particles 160, it is possible to express white, and when carbon black, Fe₃O₄, TiO₂₋ₓ, and the like are used, it is possible to express black.

Meanwhile, by controlling an external factor, it should be able to select the main color particles 140 or the sub color particles 160 to express a color of the print medium 100. In other words, when it is intended to impart a color of the print medium 100 through the main color particles 140 in a curing-target area (i.e., a portion of a layer L constituting the 3D object M), it is necessary to exclude the sub color particles 160 from the corresponding region and are left only the main color particles 140. On the other hand, when it is intended to impart a color of the print medium 100 through the sub color particles 160, it may be necessary to exclude the main color particles 140 from the corresponding region and are left only the sub color particles 160.

To this end, for example, the sub color particles 160 may be charged oppositely to the main color particles 140. For example, when an acrylic polymer derived from (meta)acrylic acid including a carboxyl group is used as a coupling agent of the main color particles 140, the surfaces of the photonic crystal particles 140' are negatively charged, and an acrylic polymer derived from N-methylaminoethyl (meta)acrylate including a positively charged amino group may be selected as the sub color particles 160.

In this way, when the main color particles 140 and the sub color particles 160 are charged oppositely to each other, it is possible to exclude any one kind of color particles and are left only the other kind of color particles by applying an electric field to the curing-target area.

### 2) Material color of main color particles

Meanwhile, a material color(Original color) of the main color particles 140 may also be used to express a color. As described above, since the main color particles 140 have a structural color in a specific array structure as the photonic crystal particles 140', various colors can be expressed through the structural color.

However, when an external factor, such as a magnetic field and the like, is not imparted to the main color particles 140, the main color particles 140 are dispersed in the print medium 100 at random irregular particle distances D. In this case, the material color of the main color particles 140 may be imparted as a color of the print medium 100.

Therefore, it is preferable to select a material having an achromatic color, which is difficult to express with a structural color, as the main color particles 140 for a reason similar to that described above with reference to the sub color particles 160. As an example, a white, grey, or black material may be selected as the main color particles 140.

Needless to say, the main color particles 140 are not necessarily limited to an achromatic material.

For example, when the main color of the 3D object M to be 3D-printed is determined, it is necessary to repeat a color imparting and color fixing process to express the main color using the structural color of the main color particles 140, and this is highly likely to take much time. Therefore, in this case, it may be advantageous to select the material color of the main color particles 140 as the main color of the 3D object M.

As another example, when it is difficult to express a specific chromatic color as a structural color by controlling a magnetic field, a material having the color which is difficult to express as its material color may be selected as the main color particles 140. For example, when it is intended to express red or purple as a single structural color, the particle distance D should be the maximum or minimum, and accordingly, the magnetic field should have the maximum or minimum intensity to express red or purple. However, when it is difficult to control the intensity of the magnetic field in this manner, a material having red or purple as its material color may be prepared as the main color particles 140.

Meanwhile, when the main color particles 140 and the sub color particles 160 are used together, it may be preferable to make the material color of the main color particles 140 and the color of the sub color particles 160 different from each other. For example, a white material may be selected as the sub color particles 160, and a material whose material color is black may be selected as the main color particles 140. When materials of the main color particles 140 and the sub color particles 160 are selected in this manner, chromatic colors may be imparted using the structural color of the main color particles 140, and achromatic colors may be imparted using the main color particles 140, the sub color particles 160, or a combination thereof.

By way of specific example, Fe₃O₄ may be used as the sole magnetic members 142a, that is, the magnetic cores 142 of the main color particles 140, or a material obtained by coating SiO₂ corresponding to the non-magnetic members 142b with Fe₃O₄ corresponding to the magnetic members 142a may be used as the magnetic cores 142 of the main color particles 140, an acrylic polymer derived from (meta)acrylic acid including a carboxyl group may be used as the coupling shells 144, and TiO₂ powder coated with an acrylic polymer derived from N-methylaminoethyl (meta)acrylate including an amino group may be used as the sub color particles 160. Here, a material color of TiO₂ is white, and a material color of Fe₃O₄ is black. In the print medium 100, the sub color particles 160 are positively charged due to the acrylic polymer derived from N-methylaminoethyl (meta)acrylate including an amino group, and the main color particles 140 are negatively charged due to the acrylic polymer derived from (meta)acrylic acid including a carboxyl group.

In addition, as the sub color particles 160, a carboxyl group, an ester group, an allyl group, and the like may be used to have a negative charge, or an ammonium polymer, an Al metal oxide, an Al metal complex, or the like may be used to have a positive charge.

However, a material of the sub color particles 160 should be selected to have a charge opposite to that of the main color particles 140.

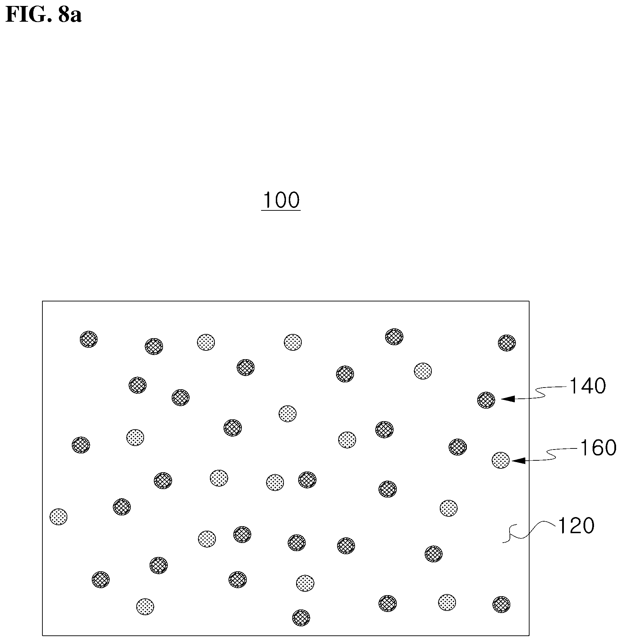

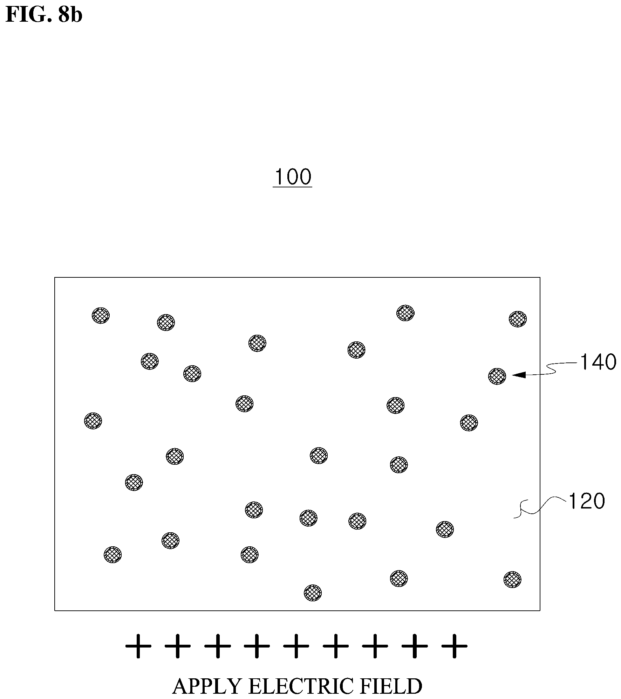

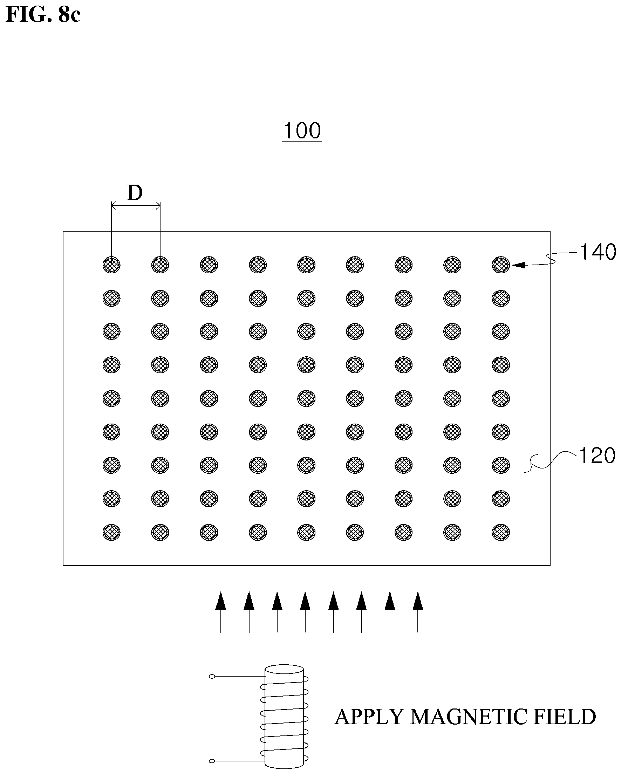

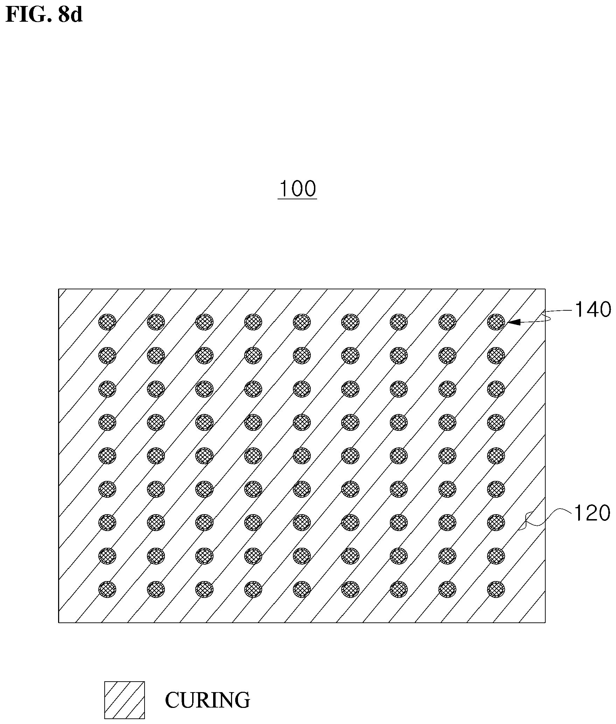

FIG. 8 shows diagrams of color impartation using a structural color of the main color particles 140 in the print medium 100 having an additional composition according to an embodiment of the present invention.

In the composition of the print medium 100 according to the specific example described above, a chromatic color is expressed as follows. First, the print medium 100 having an additional composition as shown in FIG. 8(a) is prepared. Next, as shown in FIG. 8(b), a positive electric field is applied to a region to be cured so that the positively charged sub color particles 160 are excluded and only the main color particles 140 are left. In this situation, as shown in FIG. 8(c), a magnetic field is applied to control the particle distance D between the main color particles 140 so that a desired chromatic color may be imparted to the print medium 100. Subsequently, when a curing process is performed, the color imparted to the print medium 100 is fixed as shown in FIG. 8(d).

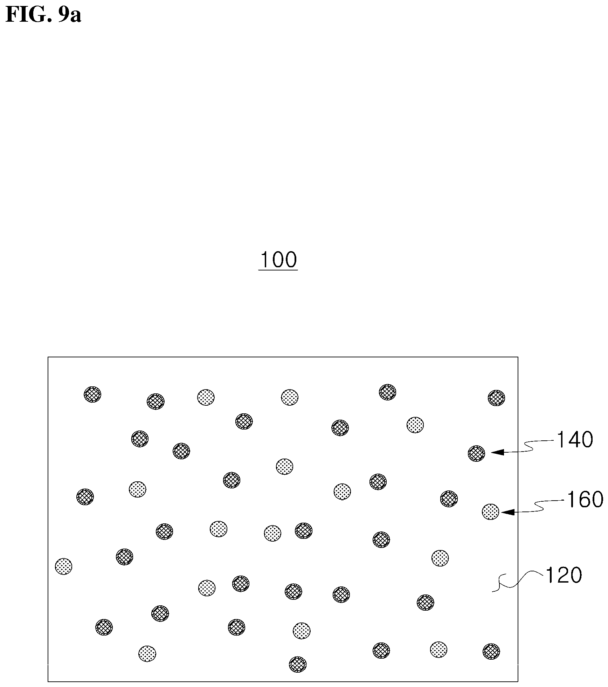

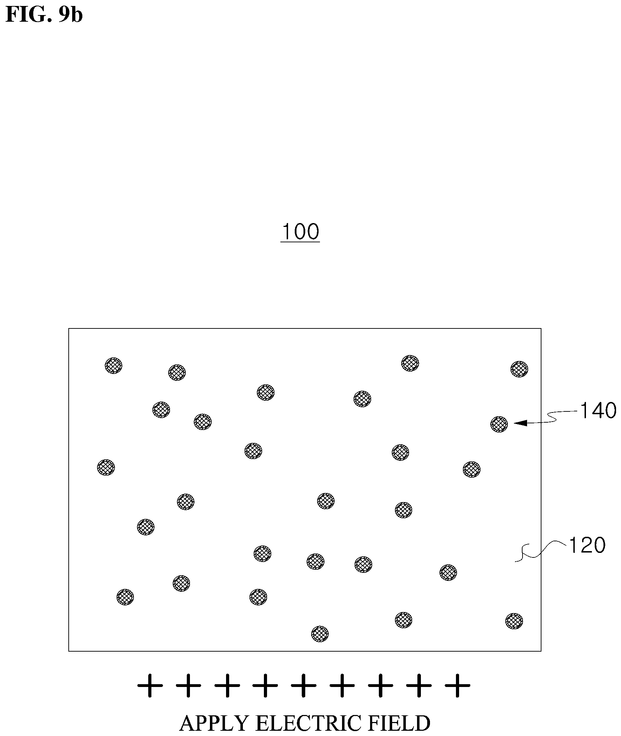

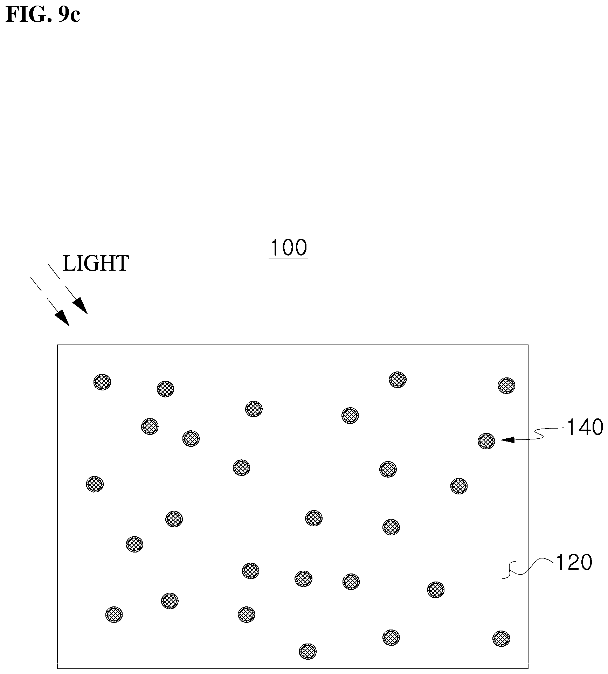

FIG. 9 shows diagrams of color impartation using the material color of the main color particles 140 in the print medium 100 having an additional composition according to an embodiment of the present invention.

Among achromatic colors, black may be expressed as follows. A positive electric field is applied to a region to be cured so that the positively charged sub color particles 160 are excluded and only the main color particles 140 are left. When no magnetic field is applied in this situation, the main color particles 140 are arranged at random particle distances D. Accordingly, the main color particles 140 have no structural color, so that black which is the material color of the main color particles 140 is imparted to the print medium 100.

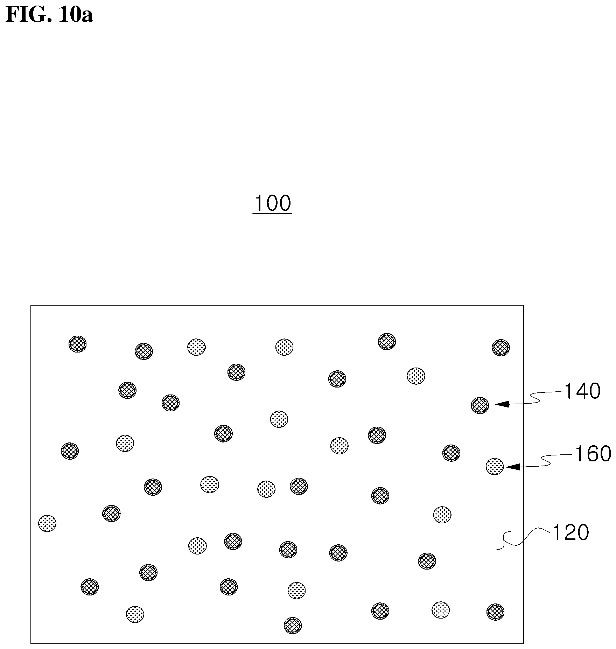

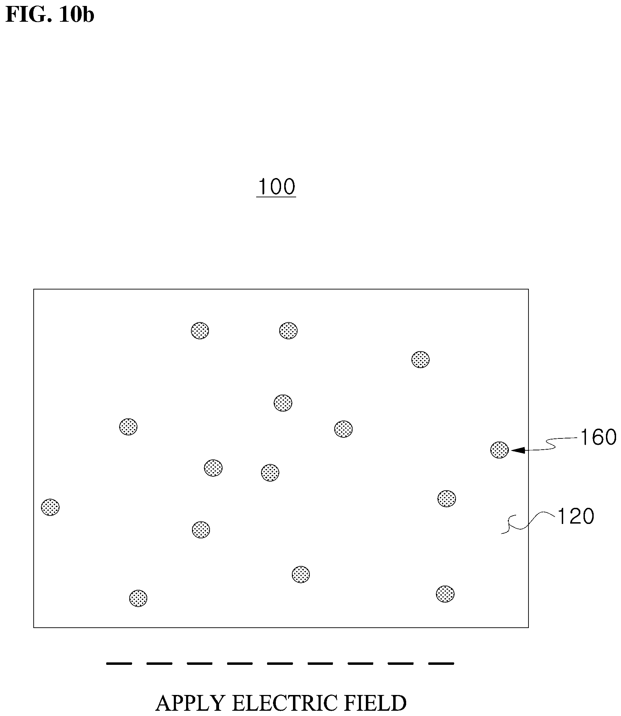

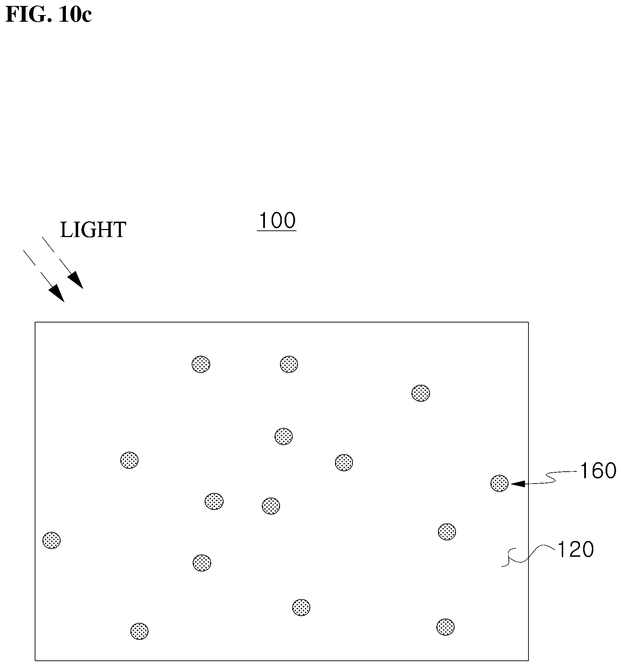

FIG. 10 shows diagrams of color impartation using the sub color particles 160 in the print medium 100 having an additional composition according to an embodiment of the present invention.

When it is intended to express white, a negative electric field is applied to a region to be cured so that the negatively charged main color particles 140 are excluded and only the sub color particles 160 are left. Accordingly, white of the sub color particles 160 is expressed by the print medium 100.

Also, when it is intended to express grey, no electric field is applied to a region to be cured or an electric field weaker than an electric field applied for black or white is imparted. Accordingly, the main color particles 140 and the sub color particles 160 are controlled to are left together in the region to be cured, so that the print medium 100 may express grey.

As described above, it is possible to express both chromatic colors and achromatic colors using the additional composition of the print medium 100 according to an embodiment of the present invention. Also, it is possible to control not only hue of a color to be expressed by the print medium 100 but also saturation, brightness, and the like by combining a chromatic color and an achromatic color, and as a result, full-color 3D printing may become possible.

Meanwhile, the sub color particles 160 may not be necessarily included in the composition of the print medium 100. In other words, the method of using the material color of the main color particles 140 has been described in connection with the sub color particles 160 but may also be imparted to the print medium 100 having the basic composition without the sub color particles 160 according to an embodiment of the present invention.

### II. Color 3D printing method

A color 3D printing method according to the present invention will be described below. Here, the color 3D printing method denotes a method of printing the 3D object M in full color or substantially full color using the basic composition and the additional composition of the print medium 100 described above.

In the present specification, each of 3D printing methods using the basic composition and the additional composition of the print medium 100 will be described, and it is to be noted that both the 3D printing methods are on the basis of the SLA method. After the 3D printing method using the basic composition is described first, the 3D printing method using the additional composition will be described.

### 1. 3D printing method using basic composition of print medium

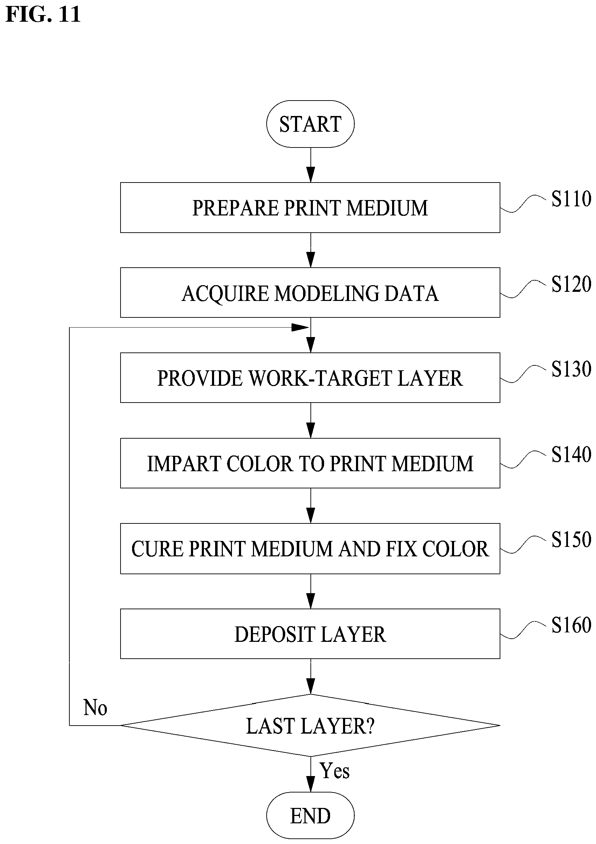

FIG. 11 is a flowchart illustrating an example of a 3D printing method according to an embodiment of the present invention. Referring to FIG. 11, an example of a 3D printing method may include a step of preparing for the print medium 100 (S110), a step of acquiring modeling data (S120), a step of providing a work-target layer L (S130), a step of imparting a color to the print medium 100 (S140), a step of fixing the color imparted to the print medium 100 by curing the print medium 100 (S150), and a step of depositing the layer L (S160). Each of the aforementioned steps will be described in further detail below.

### 1) Preparing print medium

First, the print medium 100 is prepared. As described above, the print medium 100 has the basic composition according to an embodiment of the present invention and is usually contained and prepared in the tank 1100 of the 3D printer 1000.

### 2) Modeling data

Next, 3D modeling data is prepared for 3D printing.

3D modeling data may be 3D drawing data (e.g., a computer-aided design (CAD) drawing and the like) of the shape of the 3D object M or a data set of a plurality of layers obtained from such drawing data. In 3D printing, the layers L are generally cured and deposited to form the 3D object M, and layer data may be data of the individual layers L.

Layer data may include a layer identifier indicating data of which layer L corresponds to the layer data, shape data of a shape of the layer L, and color data of the layer.

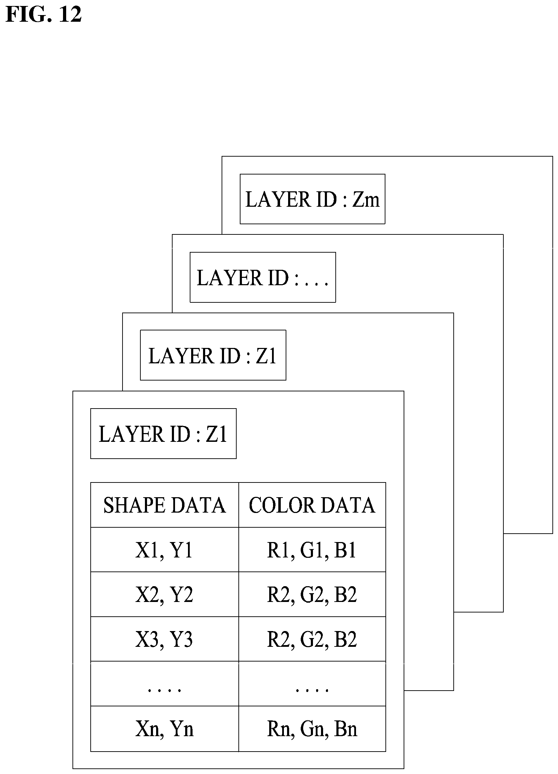

FIG. 12 is a diagram showing an example of modeling data for color 3D printing according to an embodiment of the present invention.

Referring to FIG. 12, as an example of modeling data, shape data may have a layer identifier as an index for identifying which layer L among the layers L constituting the 3D object M corresponds to the shape data, and may have pixel data of a shape of the layer L indicated by the identifier of the layer L. Also, the layer L may have color data according to pieces of pixel data. Here, the color data may be expressed in a color space which is conventionally used in general, for example, the red-green-blue (RGB) color space, the cyan-magenta-yellow-black (CMYK) color space, or the like. However, unlike this, the color data may also be in the changed form of intensity values of a magnetic field required to impart a structural color corresponding to the corresponding color through the main color particles 140.

Meanwhile, the 3D modeling data may additionally include temporary structure data of a temporary structure. In 3D printing, a first layer L is usually formed on a modeling plate 1200, and subsequent layers L are cured and deposited on the previous layer L. When there is a spatial gap of a layer L between a previous layer L and a next layer L, the next layer L cannot be deposited on the previous layer L, and thus an additional structure for depositing the next layer L may be temporarily necessary. The temporary structure data is data of such a temporary structure.

Also, the temporary structure may include data of a layer L composed of the temporary structure between the modeling plate 1200 and the final 3D object M. Generally, completing the 3D object M involves a process of separating the 3D object M from the modeling plate 1200. Here, when a layer L composed of the temporary structure is formed between the modeling plate 1200 and the 3D object M, the separation process may be easily performed. As a result, the temporary structure data is data of a part which is unnecessary in the final 3D object but temporarily formed during only the 3D printing process, and the temporary structure may be understood as comprehensively referring to a part which is separated and removed from the 3D object M after the 3D printing is completed.

### 3) Preparing work-target layer

Now, an operation of actually fabricating layers L is performed.

Generally, fabricating layers L is started at the upper surface or the lower surface of the print medium 100. The first layer L may be formed on the modeling plate 1200, and subsequent layers L may be formed on the already-formed layer L. Therefore, at first, the modeling plate 1200 is disposed at a position a predetermined thickness away from the upper or lower surface of the print medium 100 to prepare a curing-target layer L. Subsequently, a curing-target layer L is prepared while the modeling plate 1200 is elevated by a unit thickness of layers L so that the surface of the print medium 100 and the upper surface or the lower surface of the previously cured layer L have the predetermined thickness.

### 4) Imparting color

When the curing-target layer L is prepared, a color is imparted to the print medium 100. The color is imparted by applying a magnetic field to the prepared curing-target layer L with reference to the modeling data.

Specifically, color data is checked, and an intensity of the magnetic field is adjusted to impart a color indicated by the color data. The particle distance D between the main color particles 140 is controlled according to the intensity of the magnetic field, so that a structural color according to a photonic crystal structure of the main color particles 140 may be imparted to the print medium 100 as a desired color.

### 5) Fixing color by curing

When the color is imparted to the print medium 100, the print medium 100 is cured. When the print medium 100 is cured, the imparted color may be fixed.

Specifically, pixels to be cured may be determined with reference to pixel data of the shape data and cured by applying an external factor for curing to the corresponding pixels. For example, when the UV resin which is the photocurable material 120' is used as the curable material 120, the print medium 100 may be cured by radiating UV light to the pixels to be cured. When the print medium 100 is cured, a distance between the main color particles 140 is fixed. Therefore, even when the magnetic field is removed, a structural color according to the photonic crystal structure of the main color particles 140 can be maintained thereafter.

### 6) Fabricating 3D object

When the layer L is formed through the curing step (the color fixing step), a next curing-target layer L is prepared, and color imparting, curing, and color fixing are repeated with reference to layer data of the corresponding layer L to deposit the layer L. By repeating this process to a final layer L, the 3D object M is formed, and the color 3D printing is completed.

### 2. 3D printing method using print medium having additional composition

In the above-described 3D printing method, only the structural color of the main color particles 140 is used to impart a color to the print medium 100. According to the 3D printing method, it is possible to basically impart only chromatic colors, which can be expressed through the structural color, in the print medium 100. Therefore, substantially full colors can be expressed, but there is still a restriction. Needless to say, as shown in FIG. 6, it is possible to adjust achromatic colors, brightness, saturation, and the like through color combination, but imparting different colors to adjacent pixel units is likely to cause a cost problem or a time problem for impartation. For example, an operation of dividing a pixel into sub pixels, defining the sub pixels as an R pixel, a G pixel, and a B pixel, and imparting the pixel in full color by combining the colors of the sub pixels may require a print resolution of at least three times the original resolution according to definitions of the sub pixels.

Therefore, to impart full colors without combining colors in units of pixels, it is possible to use the print medium 100 having the additional composition and using the material color of the sub color or main color particles 140 according to an embodiment of the present invention.

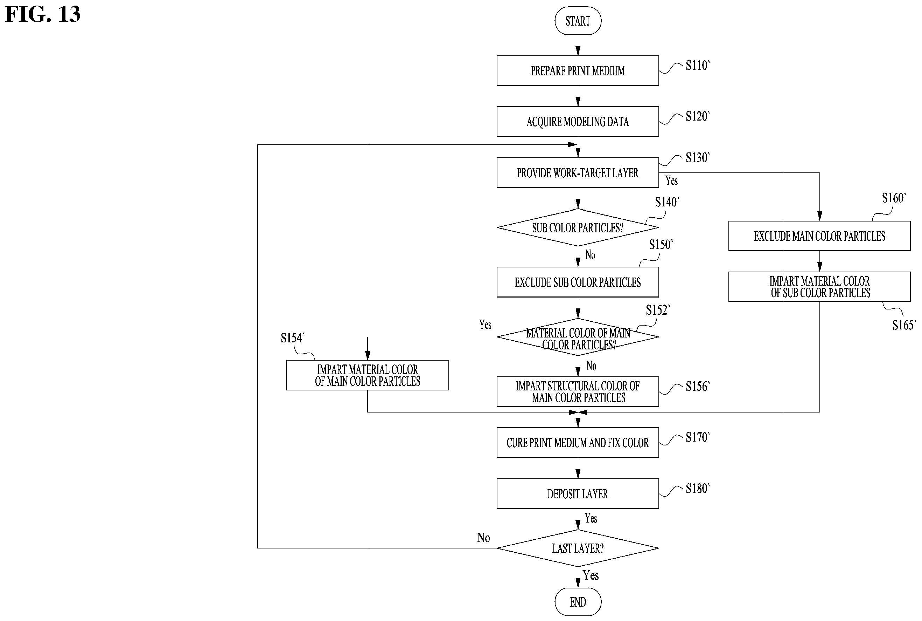

FIG. 13 is a flowchart illustrating another example of a 3D printing method according to an embodiment of the present invention.

Referring to FIG. 13, the other example of a 3D printing method may include a step of preparing the print medium 100 (S110'), a step of acquiring modeling data (S120'), a step of providing a work-target layer L (S130'), a step of determining whether a desired color is a material color of the sub color particles 160 (S140'), a step of excluding the sub color particles 160 when the desired color is not the material color of the sub color particles 160 (S150'), a step of determining whether the desired color is a material color of the main color particles 140 (S152'), a step of imparting the material color of the main color particles 140 as a color of the print medium 100 when the desired color is the material color of the main color particles 140 (S154'), a step of imparting a color to the print medium 100 through a structural color of the main color particles 140 when the desired color is not the material color of the main color particles 140 (S156'), a step of excluding the main color particles 140 when the desired color is the material color of the sub color particles 160 (S160'), a step of imparting the material color of the sub color particles 160 as the color of the print medium 100 (S165'), a step of fixing the color imparted to the print medium 100 by curing the print medium 100 (S170'), and a step of depositing the layer L (S180).

Such a 3D full-color printing method using the print medium having the additional composition may be performed as follows.

First, the print medium 100 having the additional composition is prepared. Although the print medium 100 having the additional composition basically includes the sub color particles 160, the sub color particles 160 may be excluded when the material color of the main color particles 140 is used.

Next, 3D modeling data is prepared for 3D printing. Here, color data in the 3D modeling data may further include information about which one of the structural color of the main color particles 140, the sub color particles 160, and the material color of the main color particles 140 is used to express a color to be imparted.

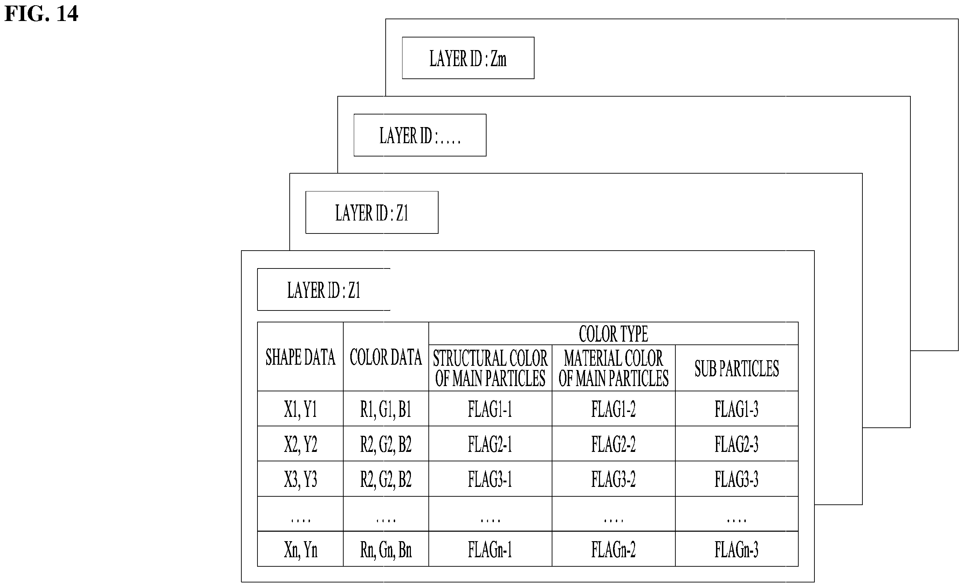

FIG. 14 is a diagram showing an example of color data for color 3D printing according to an embodiment of the present invention.

Referring to FIG. 14, color data may include an intensity of a magnetic field for a color expressed with the structural color of the main color particles 140, whether the color to be imparted is a color expressed with a material color of the main color particles 140, whether the color to be imparted is a color expressed with a material color of the sub color particles 160, whether the color to be imparted is a color expressed by mixing the material colors of the main color particles 140 and the sub color particles 160, and the like.

Next, a curing-target layer L, that is, a work-target layer L, is prepared, and then a color imparting process is performed.

In color application, particles to be used to express the color of the print medium 100 are determined.

When the color to be imparted is a color expressed with the structural color or the material color of the main color particles 140, the sub color particles 160 are excluded from a region to be cured using an electric field or the like, and only the main color particles 140 are left.

After the main color particles 140 are left, it is determined whether the structural color or the material color of the main color particles 140 will be imparted as the color of the print medium 100. When color application is performed with the structural color, a magnetic field corresponding to the structural color is imparted so that the main color particles 140 are disposed at a predetermined particle distance D in an array. Also, when color application is performed with the material color of the main color particles 140, no magnetic field is applied, and the particle distance D between the main color particles 140 is randomized, so that the material color of the sub color particles 160 is imparted to the print medium 100.

On the other hand, when the color to be imparted is a color expressed with the material color of the sub color particles 160, the main color particles 140 are excluded from the region to be cured using an electric field or the like, and only the sub color particles 160 are left. Accordingly, the material color of the sub color particles 160 may be imparted to the print medium 100.

Meanwhile, when it is intended to express a mixed color of the material color of the main color particles 140 and the material color of the sub color particles 160, no electric field is applied or an electric field is applied with an appropriate intensity to adjust a mixture ratio of the main color particles 140 and the sub color particles 160. Since no magnetic field is applied to the print medium 100, the mixed color of the material color of the main color particles 140 and the material color of the sub color particles 160 is imparted to the print medium 100.

Moreover, it is also possible to mix the structural color of the main color particles 140 and the material color of the sub color particles 160. In this case, no electric field is applied or an electric field is applied with an appropriate intensity to adjust a mixture ratio of the main color particles 140 and the sub color particles 160, and then a magnetic field is applied so that the main color particles 140 are arranged in a photonic crystal array. Accordingly, the main color particles 140 have the structural color and the sub color particles 160 have the material color, so that a color obtained by combining the structural color of the main color particles 140 and the material color of the sub color particles 160 may be imparted to the print medium 100.

In the color imparting process, the material color of the main color particles 140 may not be used, and only the material color of the sub color particles 160 may be used as necessary. Conversely, it is also possible to exclude a sub color from the additional composition and use only the material color of the main color particles 140.

As an example, when the material color of the main color particles 140 is not used, color impartation may be performed as follows. When the color to be imparted is a color expressed with the structural color of the main color particles 140, the sub color particles 160 are excluded from the region to be cured using an electric field or the like, and only the main color particles 140 are left. Here, a magnetic field is applied to the print medium 100 to adjust the particle distance D between the main color particles 140. In this way, the main color particles 140 have a structural color corresponding to the particle distance D, so that the specific structural color may be imparted to the print medium 100. Also, when the color to be imparted is a color expressed with the material color of the sub color particles 160, the main color particles 140 are excluded from the region to be cured using an electric field or the like, and only the sub color particles 160 are left, so that the material color of the sub color particles 160 may be imparted to the print medium 100.

As another example, when the sub color particles 160 are excluded from the additional composition, color impartation may be performed as follows. When the color to be imparted is a color expressed with the structural color of the main color particles 140, a magnetic field is used to control the particle distance D between the main color particles 140, so that a color is imparted to the print medium 100 according to a structural color dependent on photonic crystallinity of the main color particles 140. When the color to be imparted is a color expressed with the material color of the main color particles 140, no magnetic field is applied, and the particle distance D between the main color particles 140 is randomized, so that the material color of the main color particles 140 is imparted to the print medium 100.

When the above-described color impartation is finished, the layer L is formed while the color is fixed by curing the print medium 100, and the 3D object M is finally completed by repeating color impartation, curing of the layer (L), and deposition.

### 3. Color impartation and color fixing method

In the above-described example, color impartation and color fixing may be performed in various forms, and some of the forms will be described below.

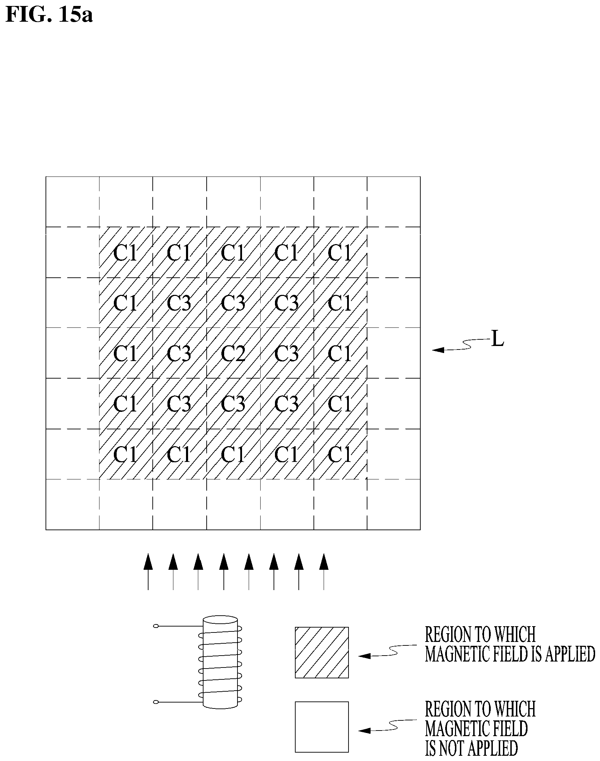

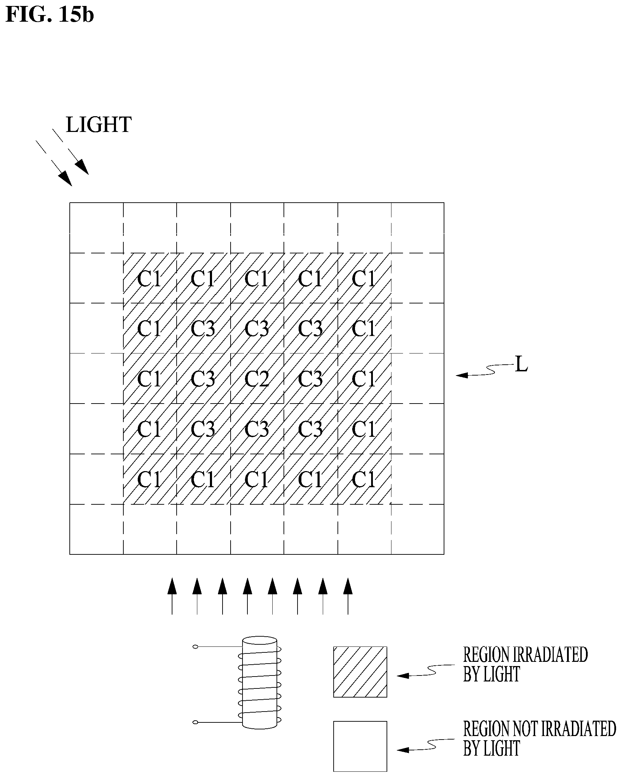

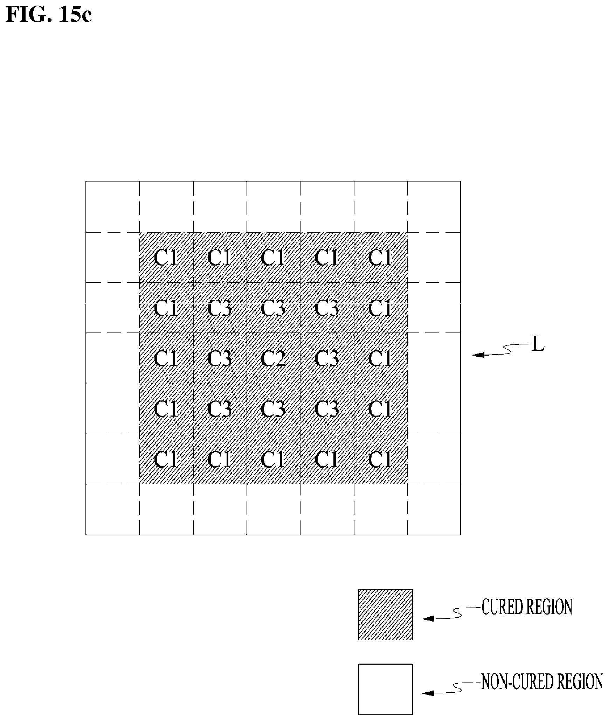

FIG. 15 shows diagrams of a first form of color impartation and color fixing in color 3D printing according to an embodiment of the present invention. FIG. 15 shows top-down views of a layer to be cured, that is, a work-target layer, when the layer randomly has a 7x7 unit area, a central 6x6 area in the unit area is a curing-target area, and it is intended to print an edge of the curing-target area in a first color, print a central portion in a second color, and print a region between the edge and the central portion in a third color. However, the case of FIG. 15 is merely an example illustrating a principle of a color impartation and color fixing method in the present invention, and it is to be noted that the curing-target area, hues of the colors to be imparted, the areas to be colored, and the like may be variously changed. Also, this is the same for other forms of color impartation and color fixing described below.

According to one form, as shown in FIG. 15(a), when color impartation is performed to specific layer L, the whole region of the layer L may be colored. Here, with reference to shape data and color data in modeling data, color impartation gives a portion to be cured a color that the portion will have. Specifically, regions to be cured are determined with reference to the shape data, color values of color data of the regions to be cured are referred to, and then the color values are imparted according to the regions to be cured. Here, an appropriate magnetic field is applied to a region having a different color value so that the main color particles 140 have a structural color corresponding to the color value.

When the curable material 120 is cured in this situation as shown in FIG. 15(b), the single layer L may be formed to have colors as shown in FIG. 15(c).

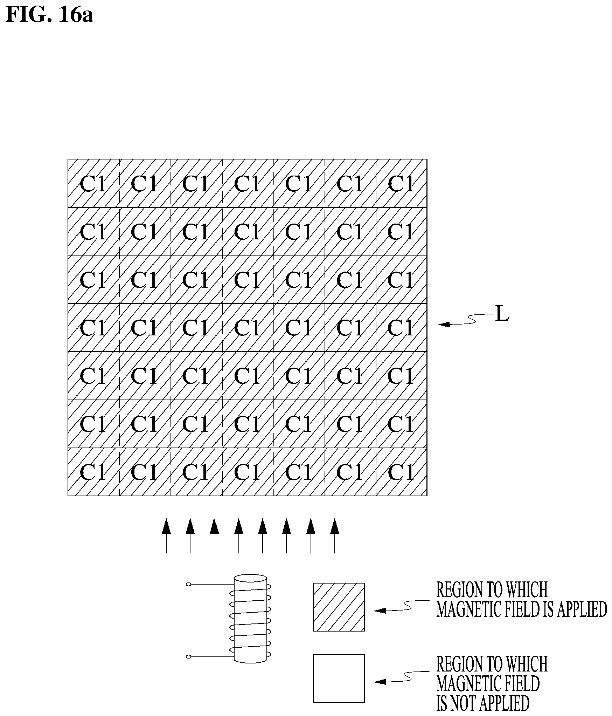

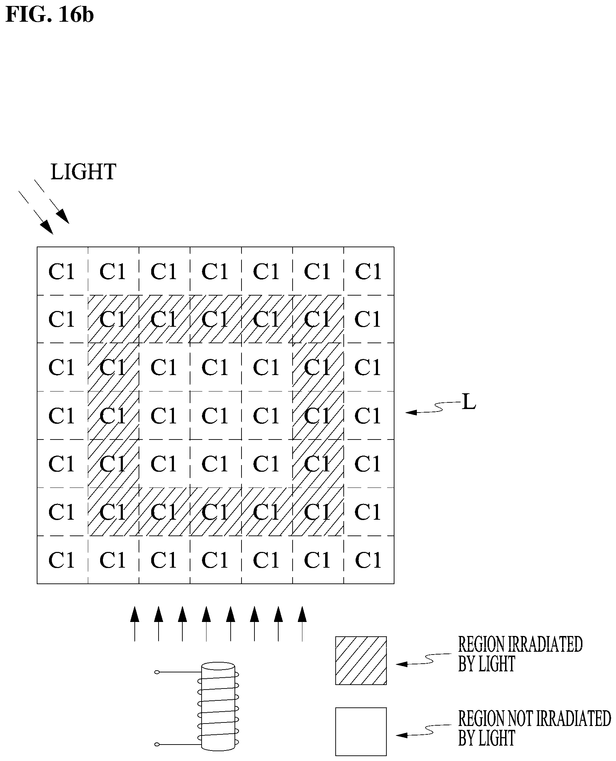

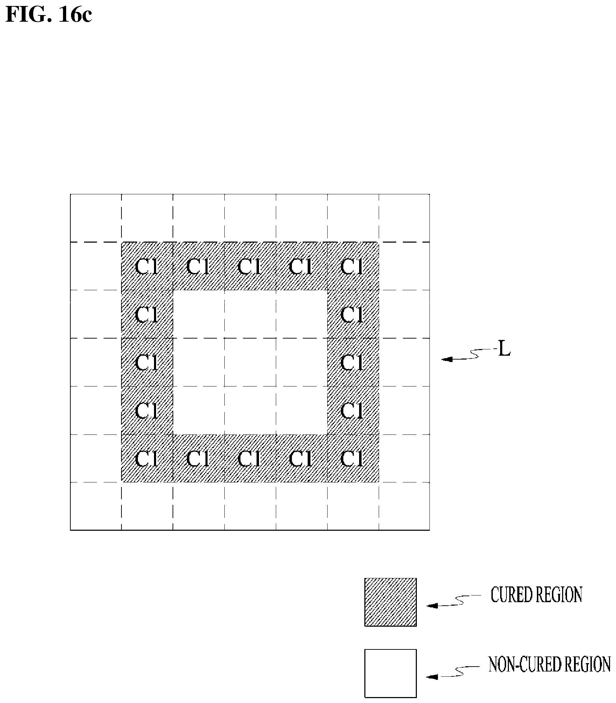

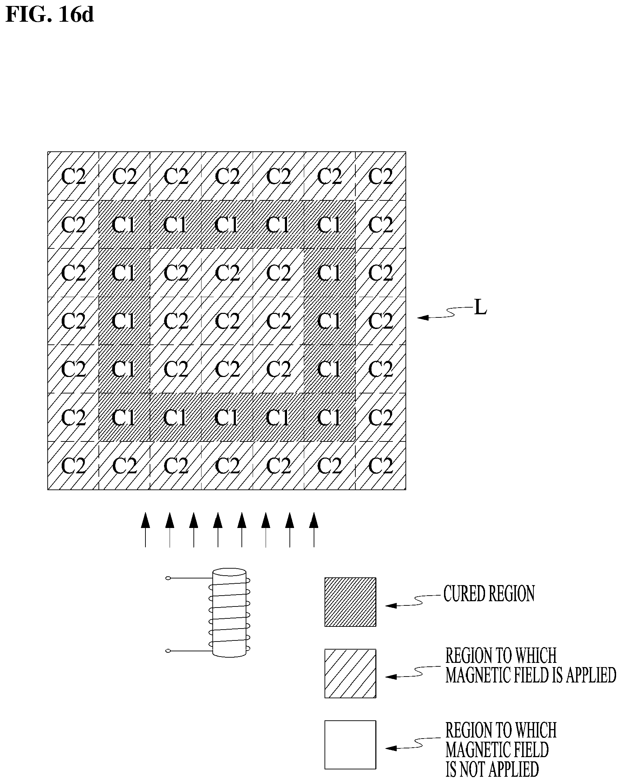

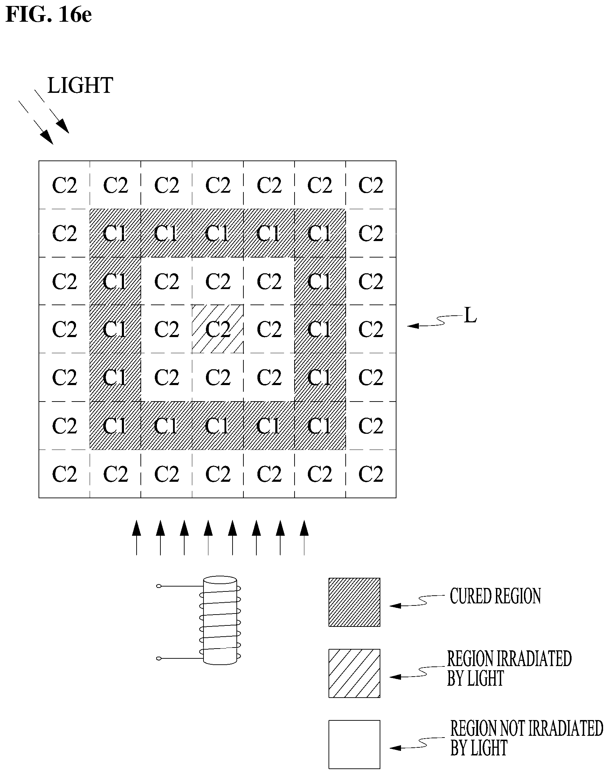

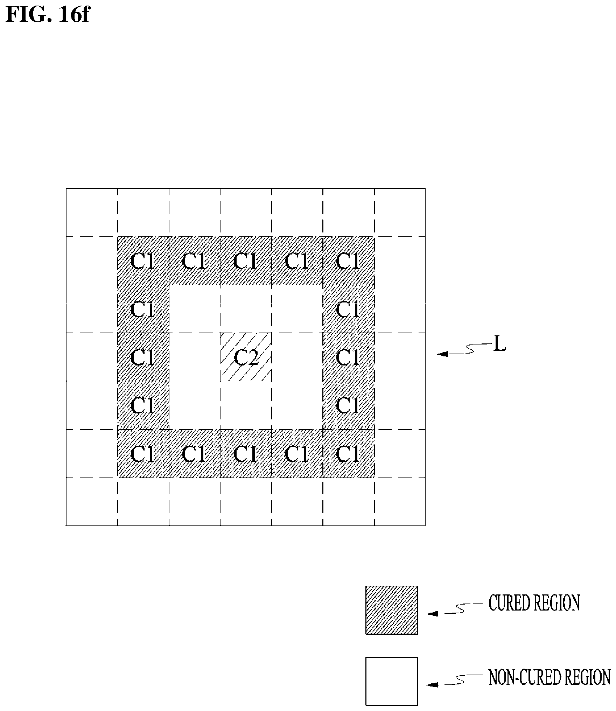

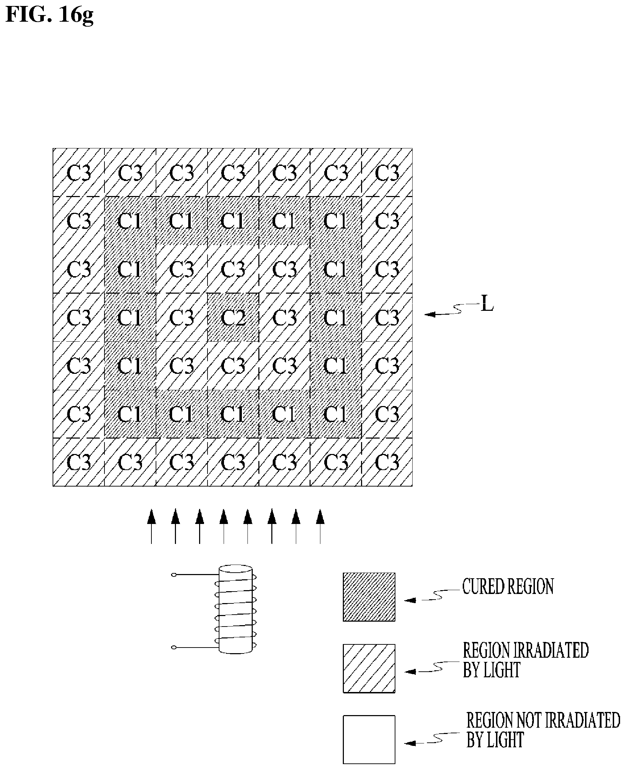

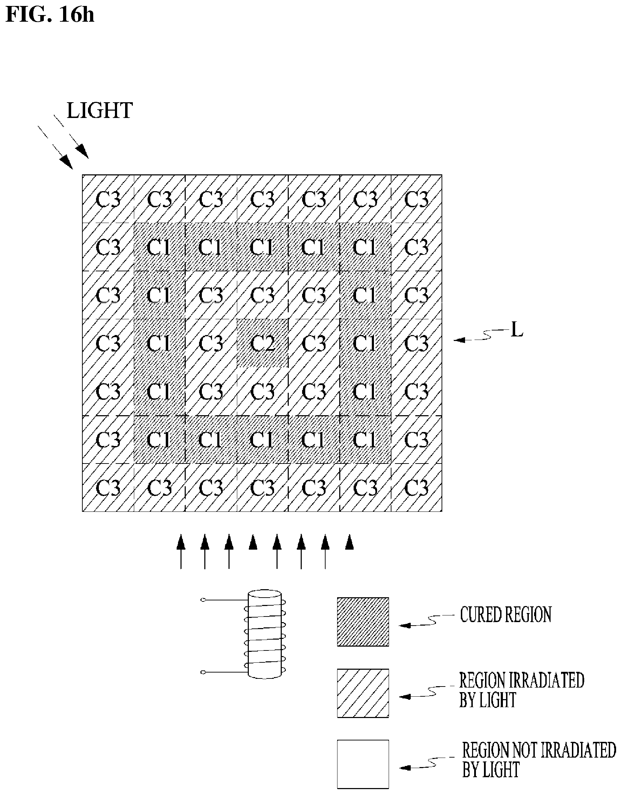

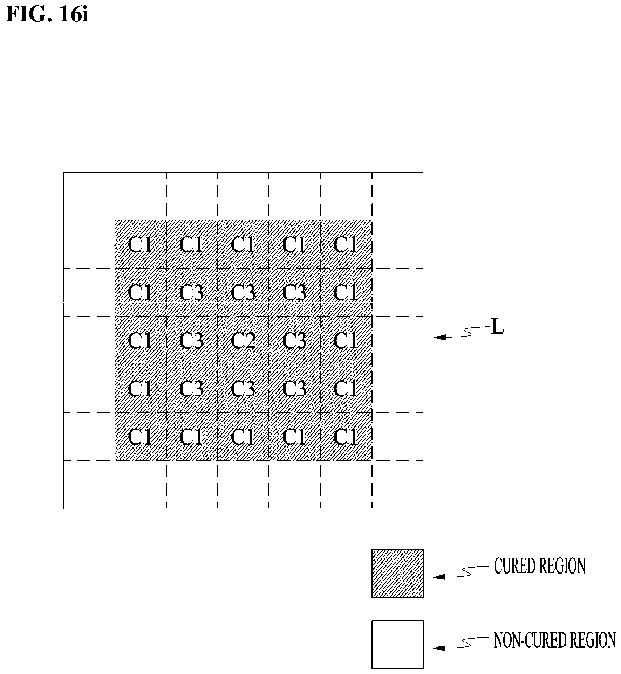

FIG. 16 shows diagrams of a second form of color impartation and color fixing in color 3D printing according to an embodiment of the present invention.

According to another form, a first color is imparted to all over specific layer L as shown in FIG. 16(a), and then only a portion which will have the first color according to modeling data may be cured in the layer L as shown in FIG. 16(b).

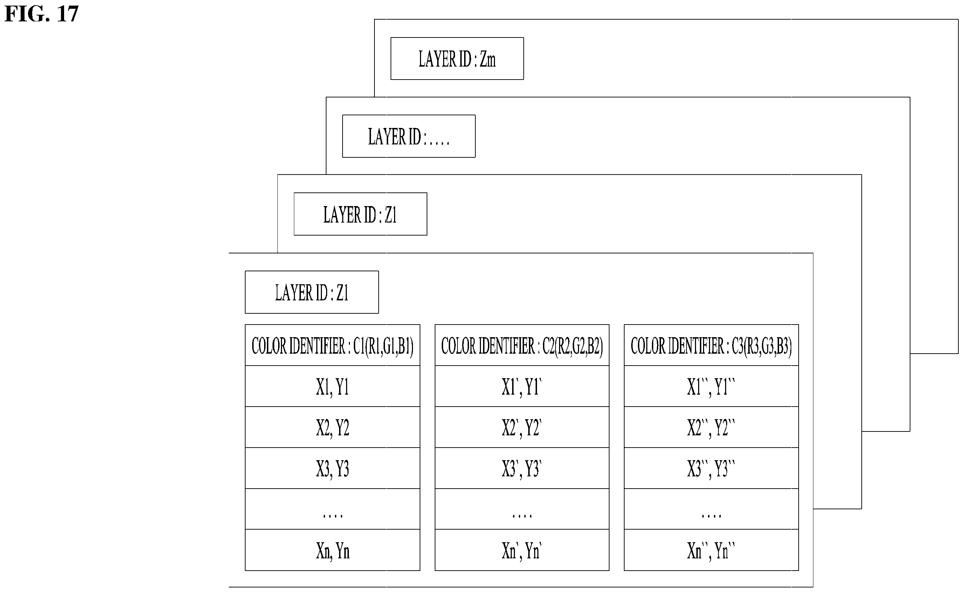

Here, in the modeling data, layer data may have color identifiers together with an identifier of the layer L, and each of the color identifiers may have shape data. FIG. 17 is a diagram showing modeling data for the second form of color impartation and color fixing in color 3D printing according to an embodiment of the present invention.

When the whole portion which will have the first color is cured as shown in FIG. 16(c), a second color is imparted to all over the layer L next as shown in FIG. 16(d), and then a portion which will have the second color according to the modeling data is cured in the layer L as shown in FIG. 16(e). At this time, although a magnetic field may be applied to the already-cured region, the color has been already fixed by curing and thus is not affected by the magnetic field. In this way, a region corresponding to the second color may be cured as shown in FIG. 16(f). Subsequently, by repeating this process for all colors included in the modeling data as shown in FIGS. 16(g) and 16(h), all portions to be cured in the layer L may be finally cured in desired colors according to pixels as shown in FIG. 16(i).

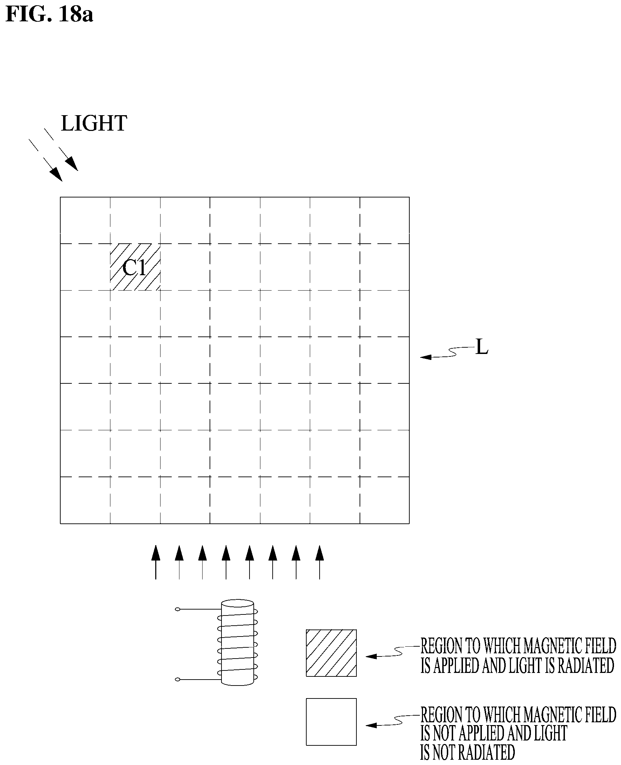

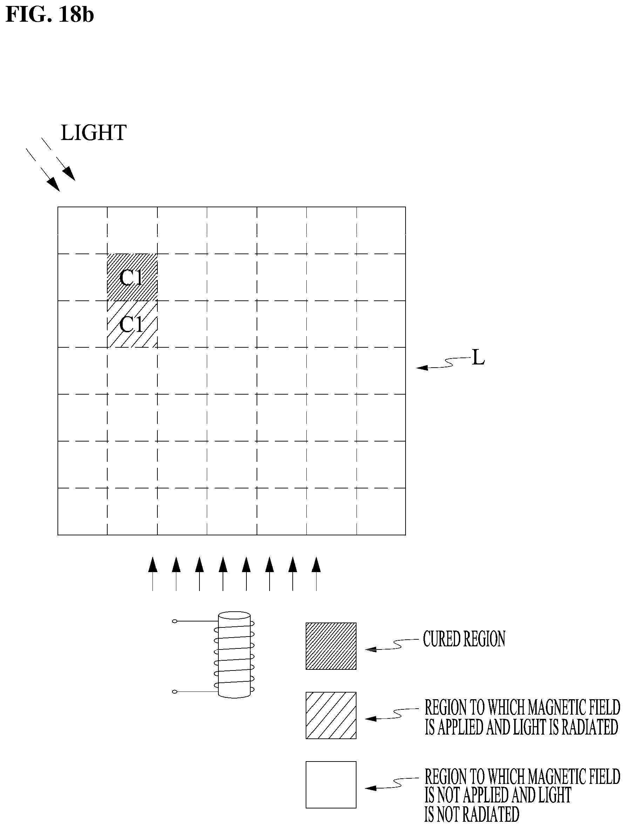

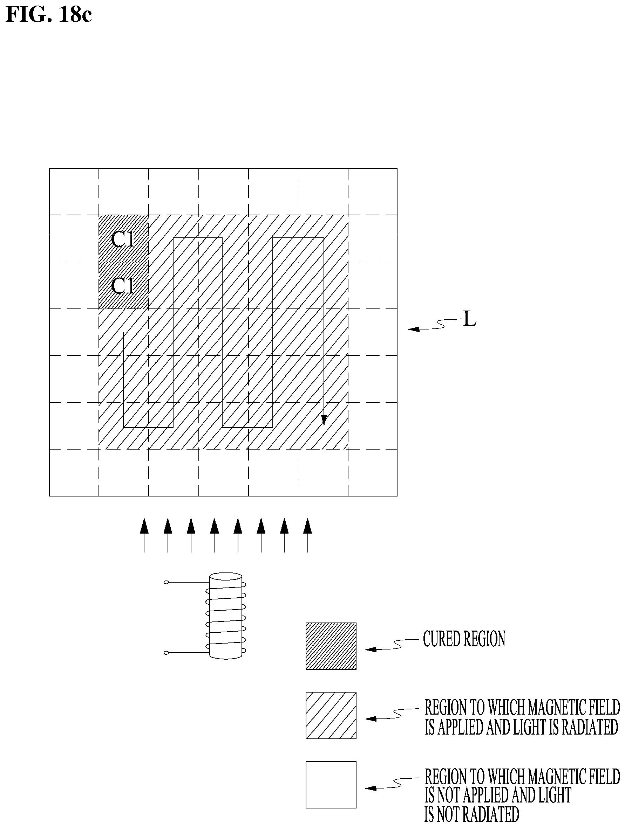

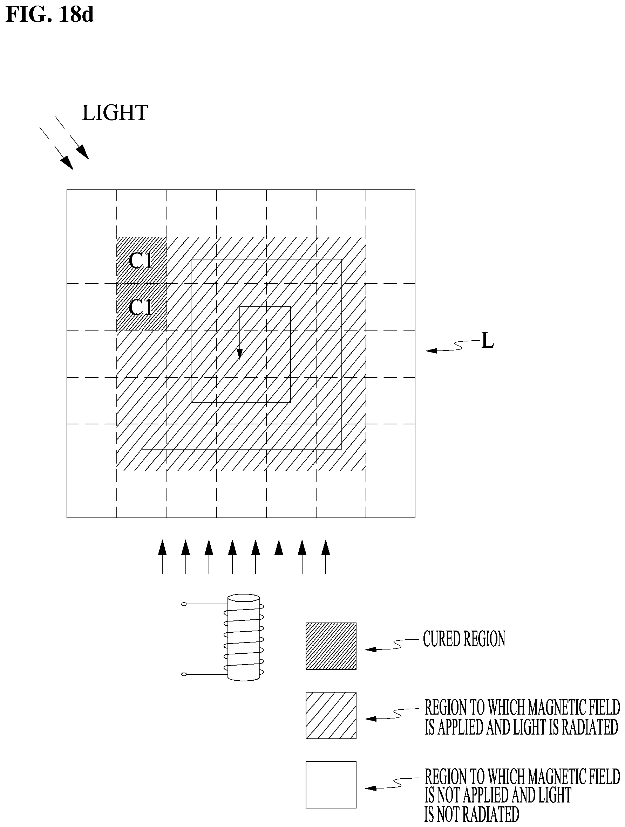

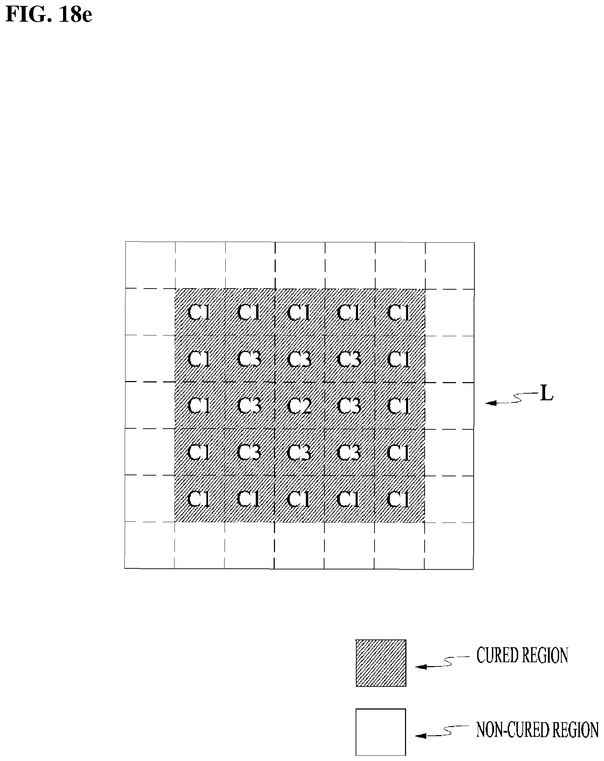

FIG. 18 shows diagrams of a third form of color impartation and color fixing in color 3D printing according to an embodiment of the present invention.

According to still another form, a color is imparted to one pixel or a region including the single pixel as shown in FIG. 18(a), and then the pixel or the region may be directly cured. Subsequently, as shown in FIG. 18(b), color impartation and color fixing may be performed for another pixel. Referring to FIGS. 18(c) and 18(d), the operation may be performed for other pixels along a path in a similar way to FIGS. 18(a) and 18(b). Subsequently, such an operation is repeatedly performed on a portion to be cured in a corresponding layer L, so that the single layer L may be completed as shown in FIG. 18(e).

Meanwhile, paths shown in FIGS. 18(c) and 18(d) are arbitrary and may be appropriately changed.

For example, in FIG. 18(c), a path is configured so that the operation for curing-target pixels is finished in a top-down direction and then performed on pixels on the right side.

Unlike this, in FIG. 18(d), a path is set so that the operation is performed on pixels of a first color, pixels of a third color, and then the third color. In other words, in FIG. 18(d), the path is set so that the operation is performed on a region having the same color value and then performed for another color value. In this case, the color impartation and color fixing operation can be continuously performed on a region having the same color value in the path, and thus it is possible to minimize a change in the intensity of a magnetic field. To set such a path, it is necessary to determine color values and regions having the color values, and referring to the modeling data shown in FIG. 17 is sufficient for the determination. In other words, the path may be configured using coordinate associated with the same color identifier.

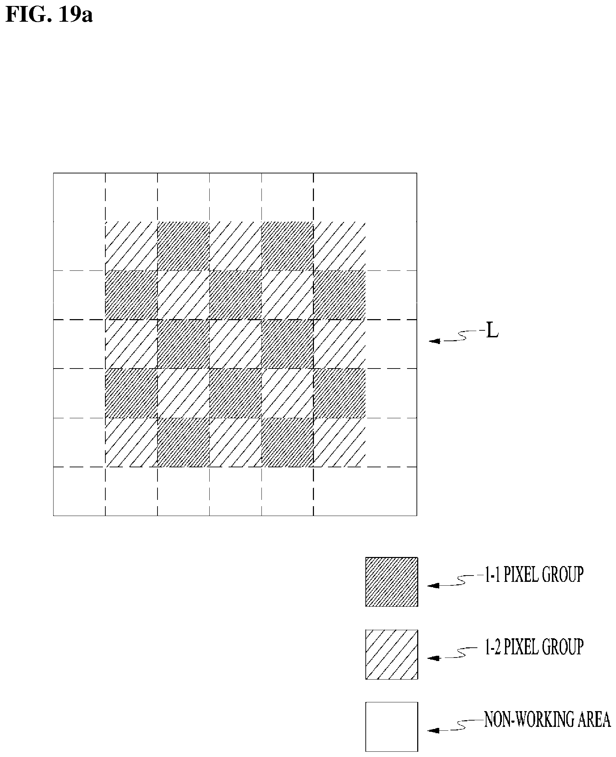

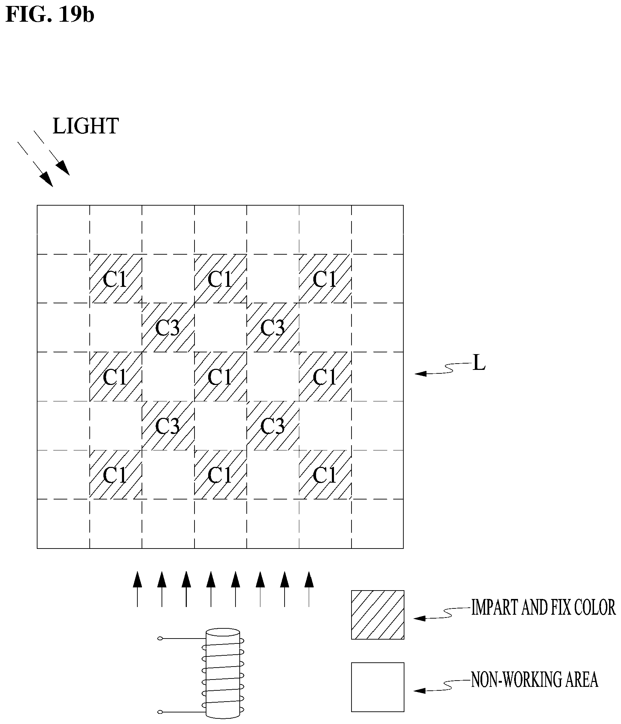

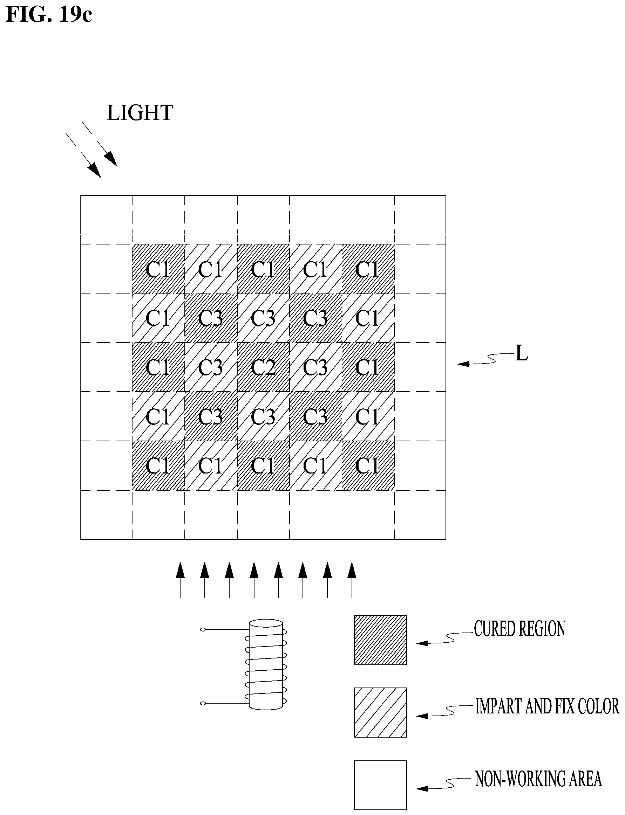

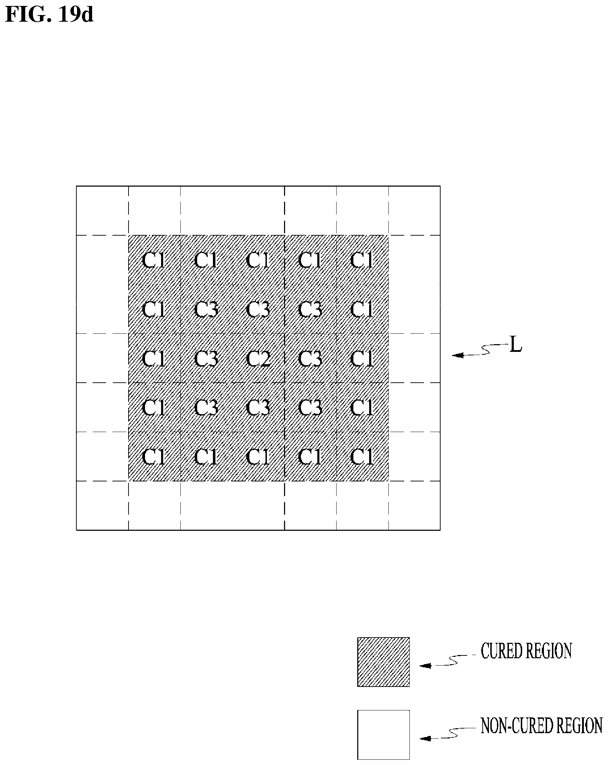

FIGS. 19 to 21 show diagrams of a fourth form of color impartation and color fixing in color 3D printing according to an embodiment of the present invention.

According to yet another form, in a region to be cured among pixels of a corresponding layer L, it is possible to set a 1-1 group of pixels which are diagonally positioned from each other and another pixel group, that is, a 1-2 group of pixels which are diagonally positioned from each other in FIG. 19(a). Here, color impartation and color fixing may be performed on the 1-1 pixel group as shown in FIG. 19(b) and then the 1-2 pixel group as shown in FIG. 19(c). In this way, the operation for all the pixels of the corresponding layer L is completed as shown in FIG. 19(d), and when this operation is repeated for each layer L, the 3D object M may be completed as a result.

The reason that color impartation and color fixing are performed not for adjacent pixels but for pixels diagonally positioned from each other is that a color of the main color particles 140 is finely controlled according to an intensity of a magnetic field and it may be difficult to apply an accurate color to adjacent pixels due to a disturbance of the intensity of the magnetic field.

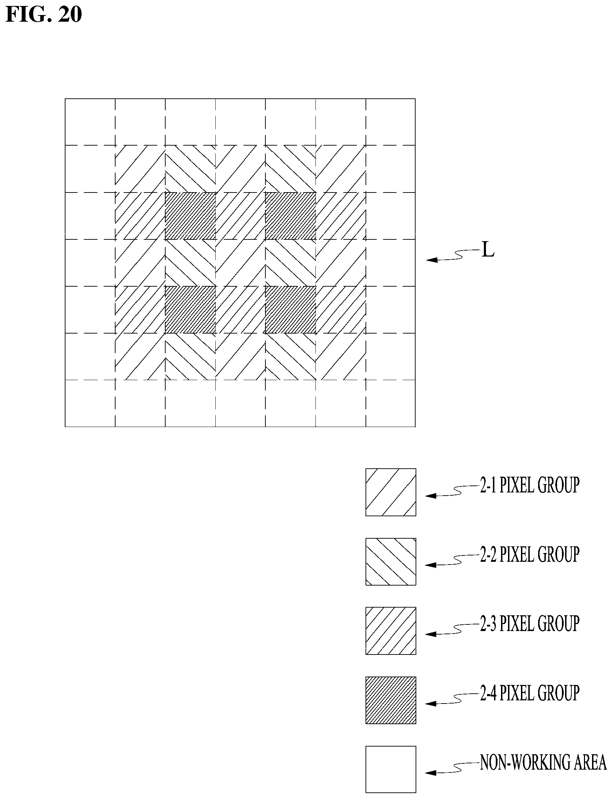

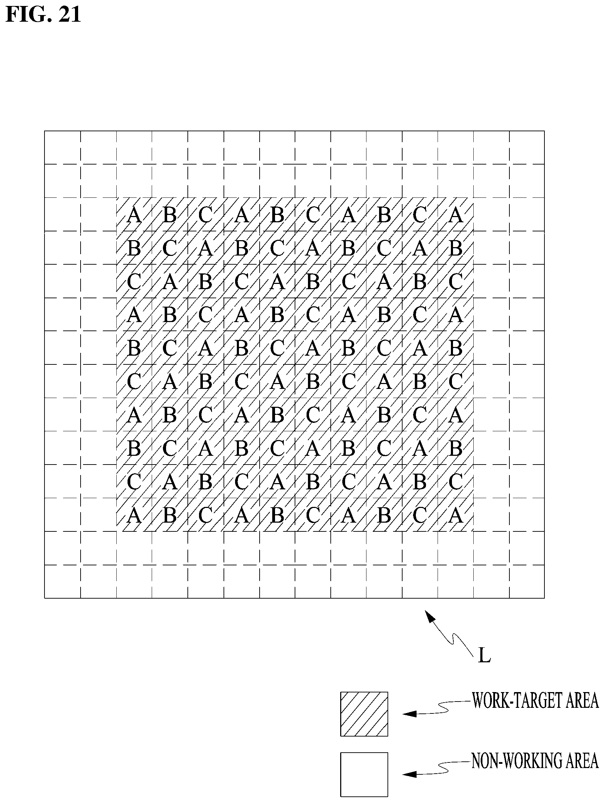

In case of necessity, as shown in FIG. 20, color impartation and color fixing may be performed four times for a 2-1 pixel group, a 2-2 pixel group, a 2-3 pixel group, and a 2-4 pixel group which are one pixel away from each other. Needless to say, according to the intensity of the magnetic field and a sensitivity of structural color control, it is possible to set pixel groups which are two pixels away from each other (an A pixel group, a B pixel group, and a C pixel group) as shown in FIG. 21, or set pixel groups in various other ways.

### 4. External color processing

In some cases, it may be unnecessary to impart a color to the inside of the 3D object M. This is because the inside of the 3D object M is not shown and it may be meaningless to impart a color thereto.

Considering this, when no color is imparted to the inside of the 3D object and colors are imparted only to the outside, an operating speed of color 3D printing may be increased, or other additional benefits may be available.

When it is intended to impart colors only to the surface of the 3D object M, it is determined whether a portion of a layer L is the surface from modeling data, and then, when the portion is not the surface but is the inside, the portion may be directly cured without imparting any color. Whether the portion is exposed to the outside may be determined on the basis of whether the portion corresponds to the outermost edge of the layer L according to shape data in layer data or whether color data of a pixel is expressed by a null value.

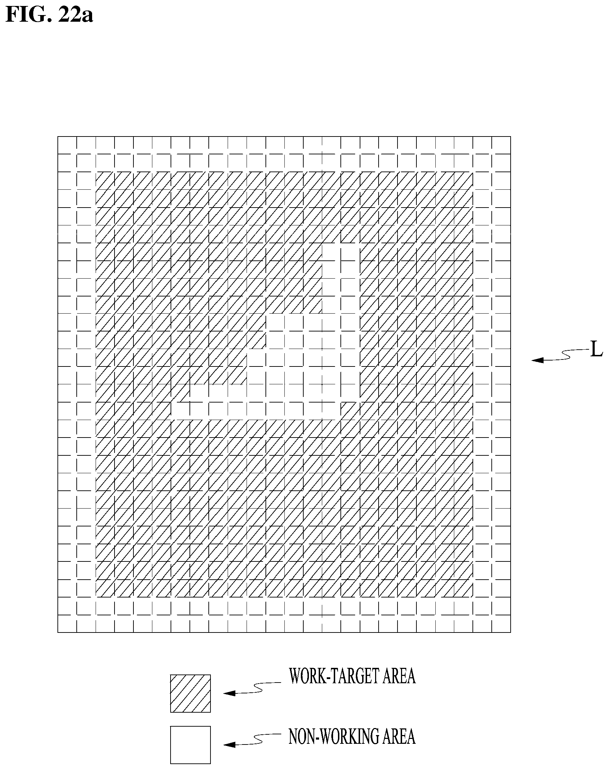

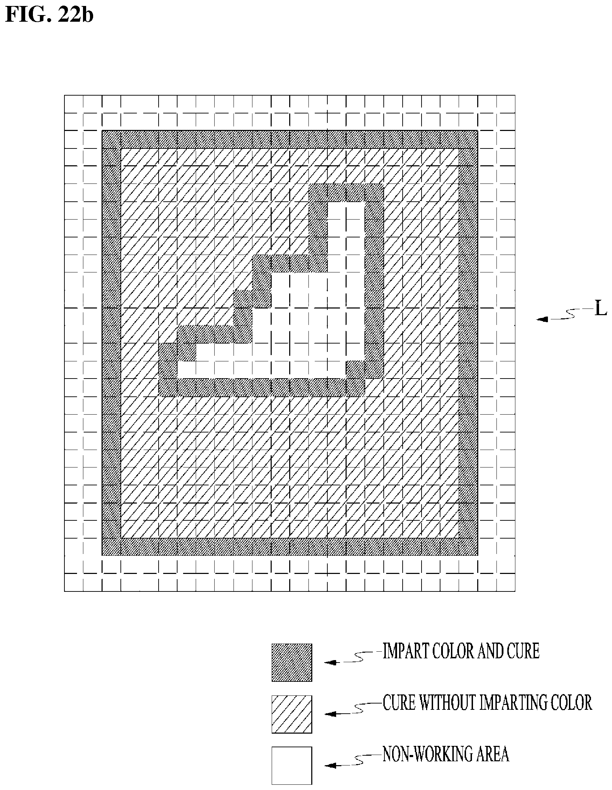

FIG. 22 shows diagrams of external color processing in color 3D printing according to an embodiment of the present invention.

It is expected that the surface of the 3D object M will be partially lost by a scratch or damage and the inside will be exposed. Therefore, for example, when it is intended to form a layer as shown in FIG. 22(a), it may be preferable to impart a color only to an edge portion. Therefore, as shown in FIG. 22(b), a color may be imparted to a predetermined thickness (corresponding to one pixel in FIG. 22(b)) from the surface of the 3D object M, and no color may be imparted to a portion disposed in the thickness.

When the print medium 100 having the basic composition according to an embodiment of the present invention is used for the inside to which no color is imparted, the material color of the main color particles 140 or the like may be directly determined to be a color of the inside and may be expressed as the null value in color data. Similarly, when the print medium 100 having the additional composition is used, the material color of the main color particles 140 or the sub color particles 160 or a mixed color of the material color of the main color particles 140 and the material color of the sub color particles 160 may be determined to be the color of the inside and may also be indicated by the null value in color data.

Meanwhile, it is very advantageous for a temporary structure to generally have the null color value in terms of work progress.

### III. Color 3D printer

The 3D printer 1000 which performs color 3D printing using the above-described print medium 100 will be described below.

### 1. Basic configuration

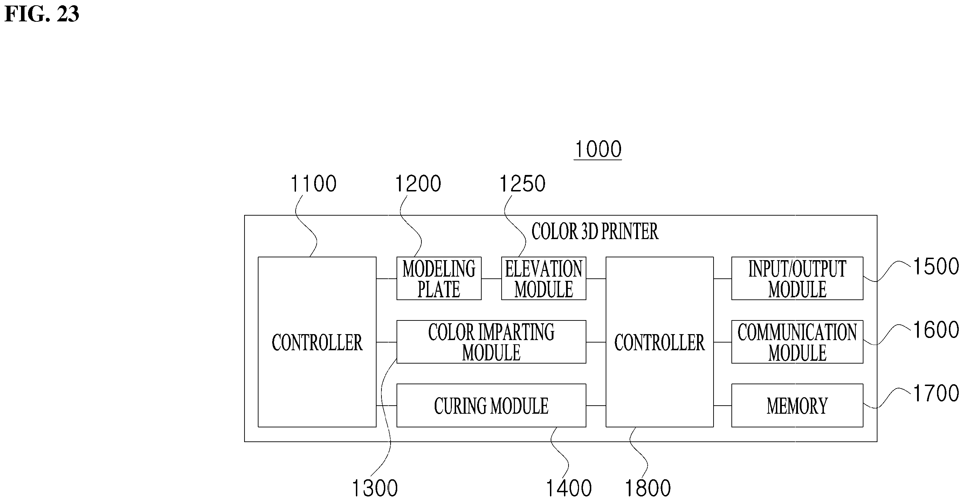

FIG. 23 is a block diagram of the color 3D printer 1000 according to an embodiment of the present invention.

Referring to FIG. 23, the color 3D printer 1000 may include the tank 1100, the modeling plate 1200, an elevation module 1250, a color imparting module 1300, a curing module 1400, an input/output module 1500, a communication module 1600, a memory 1700, and a controller 1800.

### 1) Tank

The tank 1100 contains the print medium 100.

In 3D printing, a layer L grows from the surface of the print medium 100. Since the 3D object M is generally obtained by vertically depositing planar layers L,
at least one surface, which is a working surface, of a top surface and a bottom surface of the tank 1100 is provided as a planar surface. Therefore, the tank 1100 may be generally in the form of a rectangular pillar or a cylindrical pillar.

When the curable material 120 of the print medium 100 is photocurable, the working surface may be provided with a transparent material so that light can pass through the tank 1100 and reach the print medium 100. When the layer L is formed from the upper surface of the print medium 100, the top surface of the tank 1100 may be opened. In this case, the printer may additionally include a cover or a casing which covers the tank 1100 to prevent the print medium 100 from leaking out. Unlike this, the curing module 1400 may be disposed in the tank 1100, and the tank 1100 may contain the curing module 1400 together with the print medium 100.

When an upward working surface is used, it is possible to radiate light directly to the print medium 100. However, since the print medium 100 is in a liquid state, a height of the modeling plate 1200 to be described below should be precisely controlled according to sloshing or a height of the surface. On the other hand, when a downward working surface is used, an open tank 1100 cannot be used, and thus a material which well transmits light or the like for curing the curable material 120 should be selected for the bottom surface of the tank 1100.

Also, a surface (e.g., a side surface and the like) other than the working surface of the tank 1100 may be provided transparently or semi-transparently so that a worker may easily identify progress of 3D printing.

Meanwhile, in the process of imparting a color to the print medium 100 or in the curing process of fixing a color imparted to the print medium 100, the degree of color impartation or the degree of curing may be sensitive to a temperature and the like of the print medium 100. Therefore, a temperature sensor for sensing a temperature, a temperature controller for adjusting a temperature, or the like may be installed in the tank 1100.

### 2) Modeling plate and elevation module

The modeling plate 1200 supports a first layer L (which is a layer L constituting the 3D object M or becoming a temporary structure). Generally, the modeling plate 1200 may be provided as a plate which is parallel to the working surface. The elevation module 1250 serves to elevate this modeling plate 1200 in a deposition direction (usually in a vertical direction). The elevation module 1250 may be imparted as a piston, a motor, or the like. The modeling plate 1200 is disposed at a position which is away from the working surface of the print medium 100 by a unit thickness of layers L to form the first layer L, and then recedes from the working surface while being elevated by the unit thickness every time a layer L is formed.

### 3) Color imparting module

The color imparting module 1300 may basically include a main color imparting module 1320 which serves to arrange the main color particles 140 in a photonic crystal array and thereby impart a color to the print medium 100 using the structural color of the main color particles 140.

A magnetic-field imparting module 1320', such as an electrode which generates a magnetic field and the like, may be usually used as the main color imparting module 1320. Here, the magnetic-field imparting module 1320' is a module which applies a magnetic field to a work-target layer L, adjusts the particle distance D between the main color particles 140 by adjusting an intensity of the magnetic field to cause the main color particles 140 to form a photonic crystal structure, and imparts a structural color to the print medium 100 as a result.

Meanwhile, the color imparting module 1300 may additionally include a sub color imparting module 1340. When a 3D printing operation is performed using the print medium 100 having the additional composition including the sub color particles 160 according to an embodiment of the present invention, the sub color imparting module 1340 functions to selectively exclude any one kind of the sub color particles 160 and the main color particles 140 from the work-target layer L and are left the other kind.

An electric-field applying module 1340', such as an electrode which generates an electric field and the like, may be usually used as the sub color imparting module 1340. Here, the electric-field applying module 1340' serves to push out one kind of the main color particles 140 and the sub color particles 160 from the work-target layer L and pull the other kind according to a polarity of an electric field by applying the electric field to the work-target layer L.

It is preferable for the above-described color imparting module 1300 to be located on a working surface side of the print medium 100 or the tank 1100, and the main color imparting module 1320 and the sub color imparting module 1340 may be imparted as separate physical components or one physical component.

### 4) Curing module

The curing module 1400 serves to cure the print medium 100 by imparting a curing factor to the curable material 120 and fix a color imparted to the print medium in the curing process. When the photocurable material 120' is used as the curable material 120, the curing module 1400 may be a light source 1420 which emits light. For example, when the UV resin is used as the curable material 120, the curing module 1400 may include a UV light source. Alternatively, a laser gun or the like may be used as the curing module 1400.

### 5) Input/output module

The input/output module 1500 includes various interfaces, connection ports, and the like which receive a user input or output information to a user.

The input module may receive a user input from a user. The user input may be made in various forms including a key input, a touch input, and a voice input. Such an input module capable of receiving a user input is a comprehensive concept encompassing all of, for example, a conventional keypad, keyboard, and mouse, a touch sensor for sensing the user's touch, a microphone for receiving a voice signal, a camera for recognizing a gesture and the like by image recognition, a proximity sensor composed of an illuminance sensor, an infrared sensor, or the like for sensing the user's approach, a motion sensor for recognizing the user's motion through an acceleration sensor, a gyro sensor, or the like, and various other forms of input means for sensing or receiving user inputs in a variety of forms. Here, the touch sensor may be imparted as a touch panel attached to a display panel, a piezoelectric or capacitive touch sensor for sensing a touch through a touch film, an optical touch sensor for sensing a touch in an optical manner, and the like.

In addition, the input module may be imparted in the form of an input interface (a universal serial bus (USB) port, a personal system/2 (PS/2) port, and the like) which connects an external input device for receiving a user input to the 3D printer 1000 instead of a device for sensing a user input by itself.

The output module may output and provide various kinds of information to the user. Such an output module is a comprehensive concept encompassing all of a display for outputting an image, a speaker for outputting a sound, a haptic device for generating vibrations, and various other forms of output means. In addition, the output module may be imparted in the form of a port-type output interface which connects the aforementioned individual output means to the 3D printer 1000.

Here, the display may display text, a still image, and a video by way of examples. The display is a concept of broadly-defined image display devices encompassing all of a liquid crystal display (LCD), a light emitting diode (LED) display, an organic light emitting diode (OLED) display, a flat panel display (FPD), a transparent display, a curved display, a flexible display, a 3D display, a holographic display, a projector, and various forms of other devices capable of performing an image output function. Such a display may be in the form of a touch display integrally formed with a touch sensor of the input module.

### 6) Communication module

The communication module 1600 may perform communication with an external device. Accordingly, the 3D printer 1000 may exchange various kinds of information with an external device. Here, the communication, that is, data exchange, may be performed in a wired or wireless manner. To this end, the communication module 1600 may be composed of a wired communication module for accessing the Internet and the like via a local area network (LAN), a mobile communication module for accessing a mobile communication network via a mobile communication base station and transmitting and receiving data, a short-range communication module using a wireless local area network (WLAN) communication technique, such as wireless fidelity (Wi-Fi), or a wireless personal area network (WPAN) communication technique, such as Bluetooth and ZigBee, a satellite communication module using a global navigation satellite system (GNSS), such as a global positioning system (GPS), or a combination thereof.

### 7) Memory

The memory 1700 may store various kinds of information. The memory 1700 may store data temporarily or semi-permanently. Examples of the memory 1700 may include a hard disk drive (HDD), a solid state drive (SDD), a flash memory, a read-only memory (ROM), a random access memory (RAM), and the like. This memory 1700 may be provided in a form which is embedded in the 3D printer 1000 or detachable from the 3D printer 1000.

In the memory 1700, various kinds of data required or used to operate the 3D printer 1000, such as an operating system (OS) for operating, 3D modeling data, layer data, a table for converting a drawing of the 3D object M into 3D modeling data or layer data, an application program, and the like, may be stored.

### 8) Controller

The controller 1800 controls overall operation of the 3D printer 1000. To this end, the controller 1800 may perform calculation and processing of various kinds of information and control operations of components of the 3D printer 1000.

The controller 1800 may be implemented as hardware, software, or a computer or a similar device according to a combination of hardware and software. The controller 1800 may be provided as hardware in the form of an electronic circuit which processes an electric signal to perform a control function, and provided as software in the form of a program which operates the hardware controller 1800.

From now, an operation of the 3D printer 100 may be interpreted as being performed under control of the controller 1800 unless specifically mentioned in the following description.

### 2. Operation of 3D printer

Impartation of color 3D printing using the above-described 3D printer 1000 will be described below.

First, 3D modeling data may be stored in the memory 1700. The 3D modeling data may be loaded from a website, a personal computer (PC), or the like into the memory 1700 through the communication module 1600. In this process, the 3D modeling data may be obtained when the PC converts a 3D data drawing, such as a CAD drawing or the like, into layer data through a 3D printing application. Alternatively, the CAD drawing may be directly loaded into the memory 1700, and then the controller 1800 may convert the CAD drawing into layer data.

The tank 1100 contains the print medium 100. Here, the controller 1800 may check a temperature of the tank 1100 or other environmental factors required for 3D printing through the temperature sensor or the like and appropriately control the temperature or the other environmental factors through a component, such as the temperature controller.

Next, the controller 1800 controls the elevation module 1250 to dispose the modeling plate 1200 at an appropriate position so that a work-target layer L is prepared. When the work-target layer L is a first layer L, the modeling plate 1200 is disposed at a position away from the print medium 100 or the working surface of the tank 1100 by the unit thickness of layers L. Subsequently, the modeling plate 1200 is further spaced apart from the working surface by the unit thickness of layers L every time an operation for specific layer L is completed until the 3D object M is finished.

When the work-target layer L is prepared between the surface (working surface) of the print medium 100 and the modeling plate 1200 or between the surface (working surface) of the print medium 100 and an already-cured previous work-target layer L, the color imparting module 1300 imparts a color to a region of the work-target layer L of the print medium 100 by applying a magnetic field or the like to the region. When no color is set or a color value is the null value, the color imparting module 1300 may not perform any operation.

Specifically, the controller 1800 may operate the color imparting module 1300 with reference to color data of the work-target layer L. For example, in the case of the magnetic-field applying module 1320', the controller 1800 may control the magnetic-field applying module 1320' to apply a magnetic field of an appropriate intensity according to a color data value. Here, the controller 1800 may apply different intensities of a magnetic field to curing-target pixels in the work-target layer L with reference to pixel data. Needless to say, unlike this, after one color may be imparted to the whole work-target layer L or a specific color may be imparted and cured, and then another color can be imparted. Various forms of color application and color fixing have been described above and will not be reiterated here.

When colors are imparted to the print medium 100 or it is unnecessary to impart any color to the print medium 100, the curing module 1400 cures the work-target layer L. The controller 1800 determines pixels to be cured with reference to shape data (pixel data) in the layer data and causes the curing module 1400 to cure the pixels. Like in color application, curing may be performed in various forms. These have been already described in detail in color fixing and will not be reiterated here.

When a curing operation for the single work-target layer L is completed, a process of preparing a next work-target layer L and performing color impartation and color fixing (curing) is repeated to gradually form layers L. The 3D object M is finally formed by depositing the layers, so that the 3D printing may be finished.

Here, operations according to the layers L may be performed by sequentially loading identifiers of the layers L from the modeling data. For example, assuming that the 3D object M is composed of 10 layers L, shape data and color data of a first layer L are loaded, a work-target layer L for the first layer L is prepared, colors are imparted with reference to the color data, and then a curing operation is performed with reference to the shape data. Next, preparation of a layer L, color impartation, and curing are repeated for a second layer L, a third layer L, ..., and a tenth layer L.

When the 3D printing is completed, it is possible to notify a user that the 3D printing has been finished through an output unit or the like.

Meanwhile, the controller 1800 may calculate an expected whole work time from the layer data and the like and display the expected whole work time through the output module before the printing is started or during the printing.

Also, the user may select a no-color mode, a solid color mode, a surface color mode, and the like through the input module. In the no-color mode, 3D printing is performed without expressing any color, that is, monotone 3D printing is performed without considering color data. In the solid color mode, printing is performed while even the inside of the 3D object M is colored by considering all color data in the layer data, and in the surface color mode, colors according to the color data are imparted only to a portion having a thickness which is previously set to range from the surface of the 3D object M to the inside or set according to an input of the user.

Various impartation examples of the above-described 3D printer 1000 will be described below with reference to drawings. However, the impartation examples described below are examples of impartation of the 3D printer 1000 according to an embodiment of the present invention, and it is to be noted that the spirit of the present invention is not limited to the impartation examples.

### IV. First impartation example of color 3D printer

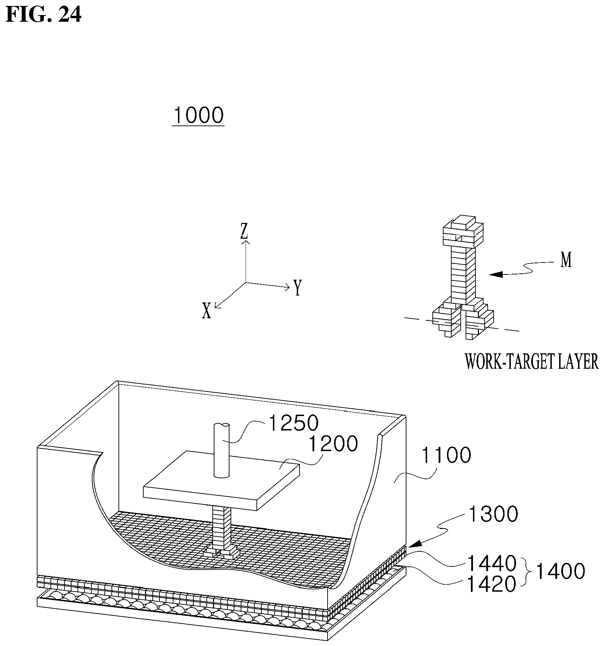

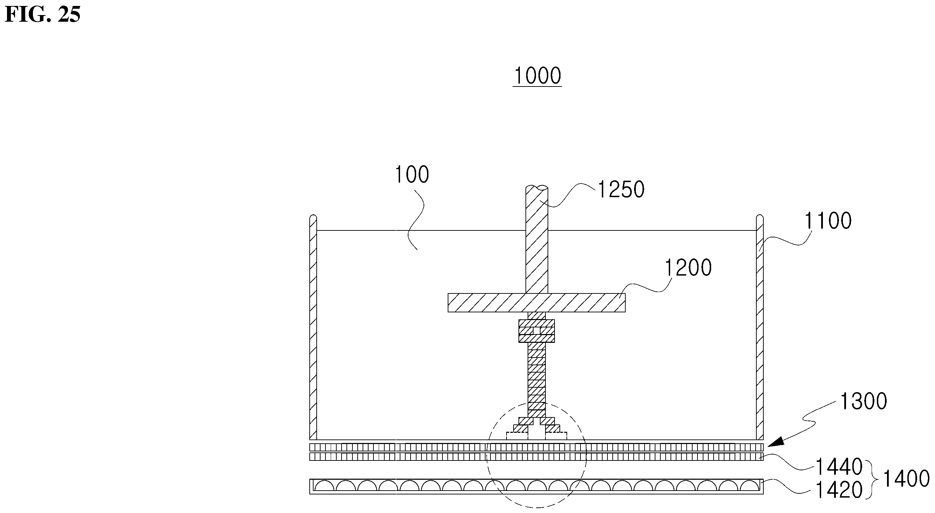

FIG. 24 is a perspective view of a first impartation example of the color 3D printer 1000 according to an embodiment of the present invention, and FIG. 25 is a cross-section view of the first impartation example of the color 3D printer 1000 according to an embodiment of the present invention.

In the first impartation example of the color 3D printer 1000 shown in FIGS. 24 and 25, color application and color fixing, that is, curing, may be performed in units of pixels.

Referring to FIGS. 24 and 25, the print medium 100 is contained in the tank 1100, and the bottom surface of the tank 1100 is transparently provided because the bottom surface functions as a working surface. The color imparting module 1300 is disposed under the tank 1100. Also, the curing module 1400 is disposed under the color imparting module 1300.

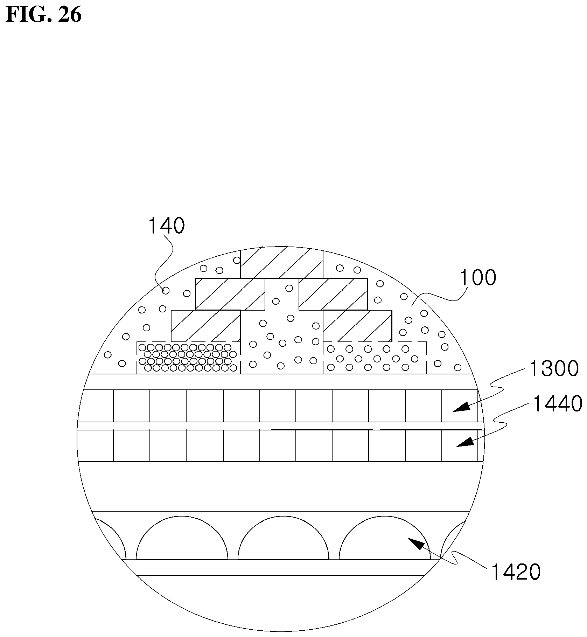

FIG. 26 is a cross-section view of the color imparting module 1300 and the curing module 1400 of the first impartation example of the color 3D printer 1000 according to an embodiment of the present invention.

Referring to FIG. 26, the color imparting module 1300 may apply a magnetic field to the working surface in units of pixels. Here, an intensity of the magnetic field applied by the color imparting module 1300 may be controlled by the controller 1800. Also, the curing module 1400 includes the light source 1420 and a light irradiation control unit 1440. The light source 1420 emits light, and the light irradiation control unit 1440 guides the light emitted from the light source 1420 to the working surface in units of pixels.

### 1. Color imparting module 1300 using 2D electrode array

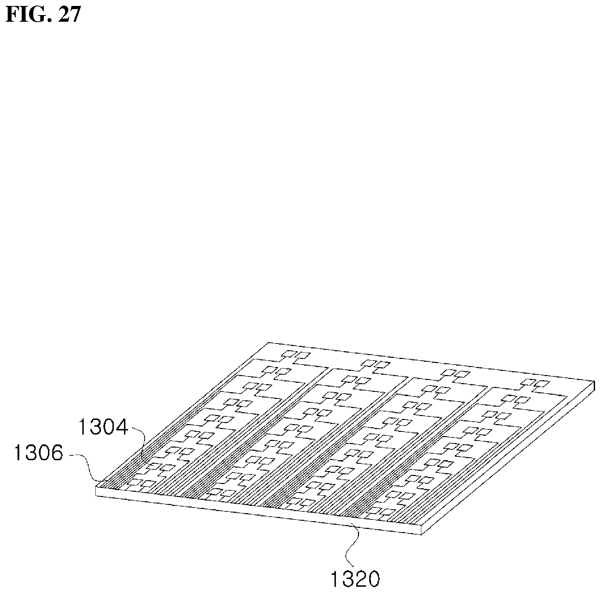

FIG. 27 is a perspective view of the color imparting module 1300 of the first impartation example of the color 3D printer 1000 according to an embodiment of the present invention.

Specifically, the color imparting module 1300 is in a form in which electrodes 1304 are disposed in a 2D array on a transparent film 1302. Here, various transparent materials including glass, PMMA, and the like may be used as the transparent film 1302. Also, various materials including transparent indium tin oxide (ITO) electrodes may be used as the electrodes 1304. Wires 1306 connected to the electrodes 1304 may use a metallic material.

In the form shown in FIG. 27, each of the electrodes 1304 may receive a voltage through a wire 1306 and generate a magnetic field. Such a magnetic field is applied to the print medium 100 on the working surface, and the particle distance D between the main color particles 140 is controlled according to the magnetic field, so that a color may be imparted to the print medium 100. At this time, the controller 1800 may adjust an intensity of the magnetic field by controlling the voltage applied to the electrode 1304. When the intensity of the magnetic field is adjusted, the particle distance D between the main color particles 140 may be adjusted, and as a result, a color imparted to the print medium 100 on the working surface may be adjusted.

Consequently, the color imparting module 1300 may impart colors to the print medium 100 according to pixels by controlling magnetic fields according to the electrodes 1304 disposed in the 2D array.

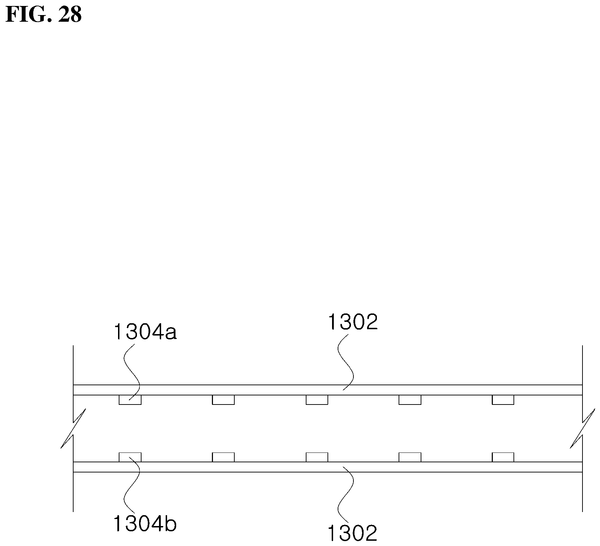

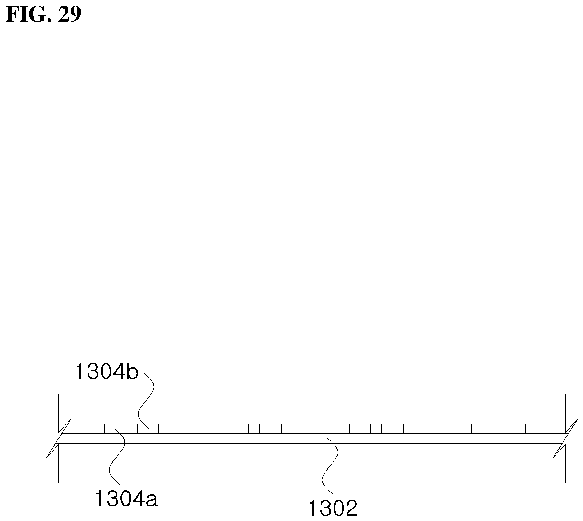

FIGS. 28 and 29 are cross-section views of a color module in the first impartation example of the color 3D printer 1000 according to an embodiment of the present invention.

Referring to FIG. 28, in the color imparting module 1300, common electrodes 1304a and ground electrodes 1304b may be disposed on a single transparent film 1302. Here, the common electrodes 1304a and the ground electrodes 1304b are disposed on a surface of transparent films 1302 facing the working surface, so that magnetic fields may be smoothly imparted to the print medium 100. Needless to say, the common electrodes 1304a and the ground electrodes 1304b may be disposed on a surface opposite to the surface of the transparent film 1302 facing the working surface.

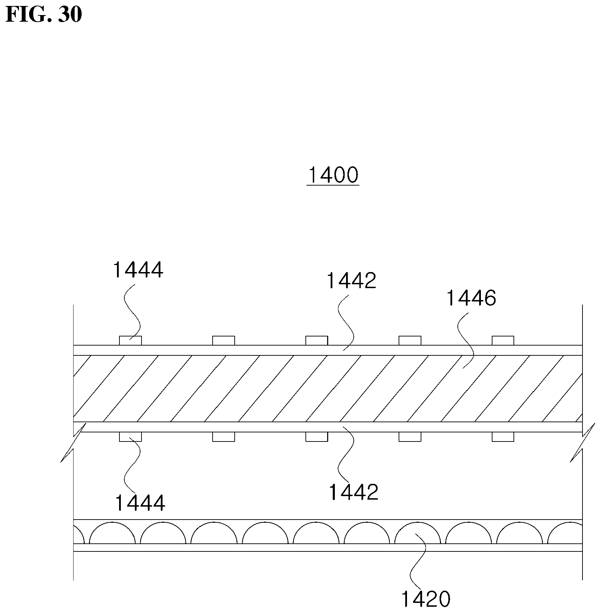

Also, referring to FIG. 29, in the color imparting module 1300, common electrodes 1304a and ground electrodes 1304b may be disposed on a pair of films 1302a and 1302b, respectively. However, in the color imparting module 1300 shown in FIG. 30, magnetic fields are concentrated between the common electrodes 1304a and the ground electrodes 1304b, so that intensities of magnetic fields imparted to the print medium 100 may be reduced.

### 2. Curing module using 2D electrode array

FIG. 30 is a cross-section view of the curing module 1400 of the first impartation example of the color 3D printer 1000 according to an embodiment of the present invention.

Referring to FIG. 30, in the curing module 1400, the light irradiation control unit 1440 may include a pair of transparent films 1442, electrodes 1444 installed on the transparent films 1442, and an organic liquid crystal layer 1446 disposed between the pair of transparent films 1442. This is similar to a thin film transistor (TFT) LCD from which a color filter has been removed.

Here, the electrodes 1444 are arranged in a 2D array on the transparent films 1442, and whether light is passed through the organic liquid crystal layer 1446 may be controlled according to on or off of the electrodes 1444. Accordingly, light emitted from the light source 1420 may be transmitted to the working surface in units of pixels by each of electrodes.

Consequently, the curing module 1400 may cure the print medium 100 in units of pixels by controlling light transmission to the working surface of the print medium 100 according to pixels through each of the electrodes 1444 disposed in the 2D array.

Meanwhile, in the light irradiation control unit 1440, the electrodes 1444 include common electrodes 1444a and ground electrodes 1444b, and the common electrodes 1444a and ground electrodes 1444b may be disposed respectively on a pair of films or disposed together on one film like in FIGS. 28 and 29.

### 3. Color 3D printing operation in units of pixels

When the color imparting module 1300 and the curing module 1400 according to the above-described first impartation example are used, color 3D printing may be performed in units of pixels. Operations of the 3D printer 1000 according to the first impartation example will be described below.

When a print command for the predetermined 3D object M is input through the input module while the print medium 100 is contained in the tank 1100, the controller 1800 starts a 3D printing operation according to the print command.

When 3D printing is started, the controller 1800 acquires 3D modeling data of the 3D object M and controls the elevation module 1250 to provide a region to be a work-target layer L in the working surface of the print medium 100 by adjusting a height of the modeling plate 1200. Also, the controller 1800 extracts layer data of the work-target layer L from the modeling data.

Next, the controller 1800 controls voltages applied to electrodes with reference to color data so that colors are imparted according to pixels. Here, the controller 1800 may impart one of colors to be imparted to the corresponding layer L, perform a curing operation for pixels corresponding to the color, and then repeat this process for other colors to complete an operation for the corresponding layer L. Alternatively, the controller 1800 may simultaneously impart all the colors to be imparted to the corresponding layer L and perform a curing operation only once to complete an operation for the corresponding layer L.

Needless to say, as a compromise, a predetermined number of colors may be simultaneously imparted, only pixels corresponding to the colors may be cured, and then this process may be repeated for the predetermined number of other colors to complete an operation for the corresponding layer L.

When color impartation and fixing are completed as described above, the operation is repeated to deposit layers L while the modeling plate 1200 is repeatedly elevated by a thickness of a layer L, so that the 3D object M may be generated.

Meanwhile, although it has been described that the color imparting module 1300 and the curing module 1400 perform color impartation and color fixing (curing) in units of pixels using a 2D electrode array in the first impartation example of the color 3D printer 1000, the color imparting module 1300 and the curing module 1400 do not necessarily have the same pixel resolution.

For example, the color imparting module 1300 may have a larger or smaller number of pixels than the curing module 1400. Therefore, a resolution at which the curing module 1400 cures a unit area may be higher or lower than a resolution at which colors can be imparted to a unit area.

### V. Second impartation example of color 3D printer

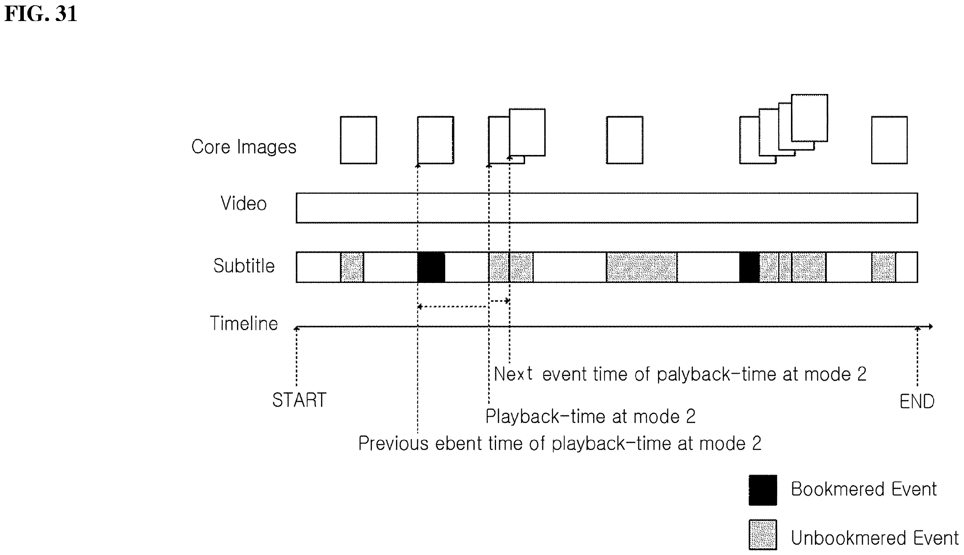

FIG. 31 is a cross-section view of a second impartation example of the color 3D printer 1000 according to an embodiment of the present invention.

In the color 3D printer 1000 according to the second impartation example, a color particle selecting module 1320' is added to the color 3D printer 1000 according to the first impartation example. Here, the color particle selecting module 1320' serves to exclude one kind of the main color particles 140 and the sub color particles 160 from the work-target layer L and are left the other kind by imparting an electric field to the print medium 100.

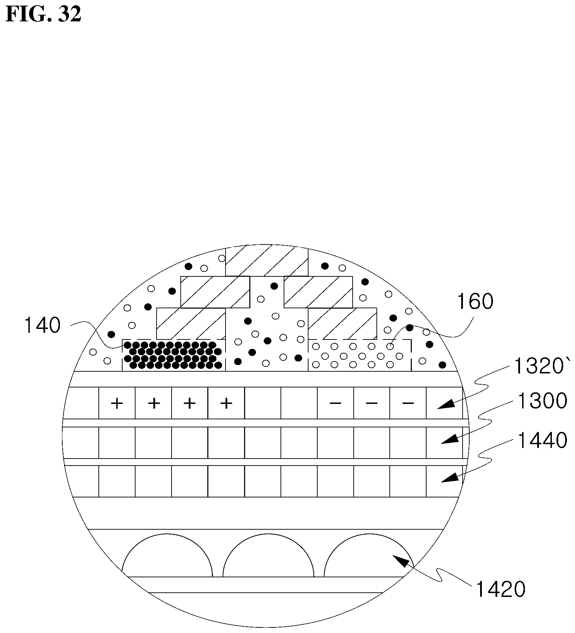

FIG. 32 is a cross-section view of the color particle selecting module 1320' of the second impartation example of the color 3D printer 1000 according to an embodiment of the present invention.

Referring to FIG. 32, the color particle selecting module 1320' may be installed on or under the color imparting module 1300. The color particle selecting module 1320' may be basically in a similar shape to the color imparting module 1300 in the first impartation example. In other words, the color particle selecting module 1320' may be provided in a form in which electrodes 1324' are disposed in a 2D array on a flat film 1322'.

Accordingly, each of the electrodes 1324' of the color particle selecting module 1320' may apply an electric field to a unit pixel. Specifically, the controller 1800 may cause the electrode 1324' to generate the electric field by applying a voltage to the electrode 1324'. When the electric field is applied to the unit pixel while the print medium 100 having the additional composition according to an embodiment of the present invention is used, any one kind of the main color particles 140 and the sub color particles 160 is excluded, and the other kind is left. Accordingly, the material color of the sub color particles 160 can be imparted to the print medium 100.

When 3D printing is started, the controller 1800 acquires 3D modeling data of the 3D object M and controls the elevation module 1250 to provide a region to be a work-target layer L in the working surface of the print medium 100 by adjusting a height of the modeling plate 1200. Also, the controller 1800 extracts layer data of the work-target layer L from the modeling data.

Next, the controller 1800 determines whether a color value indicates a color to be imparted by the main color particles 140 or the sub color particles 160 with reference to color data.

When the color value indicates a color to be imparted by the main color particles 140, the controller 1800 controls the color particle selecting module 1320' to apply an electric field for excluding the sub color particles 160 from a corresponding pixel. Subsequently, the controller 1800 imparts colors to the print medium 100 by applying no magnetic field when the color value indicates the material color of the main color particles 140, and by applying an appropriate voltage to the color imparting module 1300 when the color value indicates the structural color of the main color particles 140.

On the other hand, when the color value indicates a color to be imparted by the sub color particles 160, the controller 1800 controls the color particle selecting module 1320' to apply an electric field for excluding the sub(main) color particles 160 from the corresponding pixel. Accordingly, the material color of the sub color particles 160 may be imparted to the print medium 100.

Subsequently, the 3D object M is completed in a similar way to 3D printing according to the first impartation example.

### VI. Third impartation example of color 3D printer

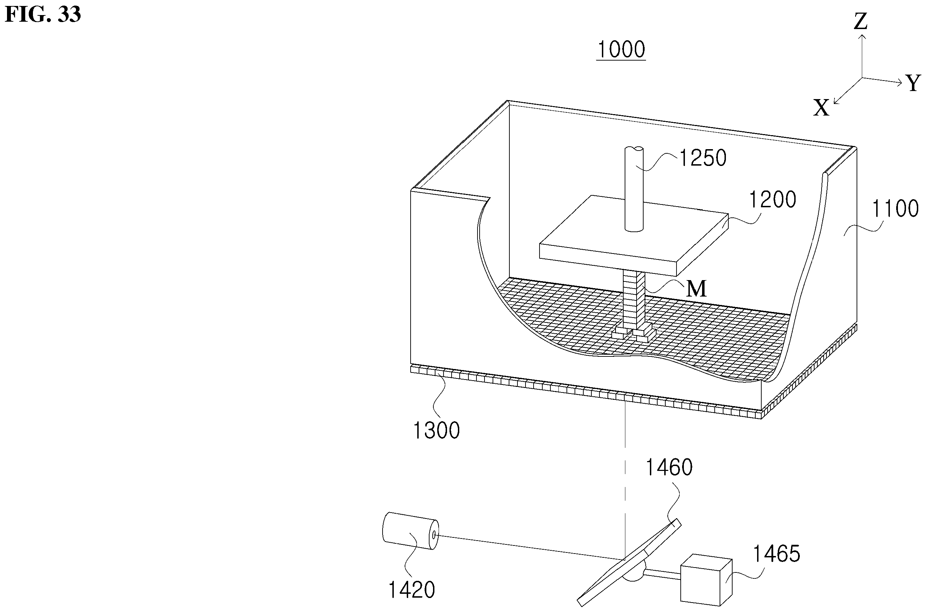

FIG. 33 is a cross-section view of a third impartation example of the color 3D printer 1000 according to an embodiment of the present invention.

In the color 3D printer 1000 according to the third impartation example, the curing module 1400 of the color 3D printer 1000 according to the first impartation example is changed in form.

Referring to FIG. 33, the curing module 1400 is disposed under the color imparting module 1300. However, unlike the first impartation example, the curing module 1400 is not composed of a combination of a TFT LCD from which a color filter has been removed and a backlight but may be composed of the light source 1420, a reflecting mirror 1460, and an angle control means 1465.

Specifically, the light source 1420 may emit UV light and the like. The reflecting mirror 1460 reflects the light emitted from the light source 1420 toward a work-target layer L. Also, the angle control means 1465 may adjust a path of the light reflected by the reflecting mirror 1460 by controlling an angle of the reflecting mirror 1460, thereby controlling a region to be irradiated by the light.

3D printing using the color 3D printer 1000 according to such a 3D impartation example may be performed as follows.

The modeling plate 1200 is elevated to prepare a region to be a work-target layer L, and a color according to a structural color or a material color is imparted to the region in units of pixels by applying a magnetic field to the region or in other manners. This is similar to the first impartation example.

Subsequently, in the curing step, the controller 1800 may determine a pixel to be cured with reference to shape data in corresponding layer data of modeling data and cause the print medium 100 to be cured by controlling the angle of the reflecting mirror 1460 so that the light emitted from the light source 1420 is reflected to the pixel to be cured. A UV light source may be used as the light source 1420, and a laser light source may also be used. Since the single light source 1420 and the reflecting mirror 1460 are used in the structure, it is necessary to rapidly cure a unit pixel. Therefore, it may be preferable to use a laser light source which requires a shorter curing time.

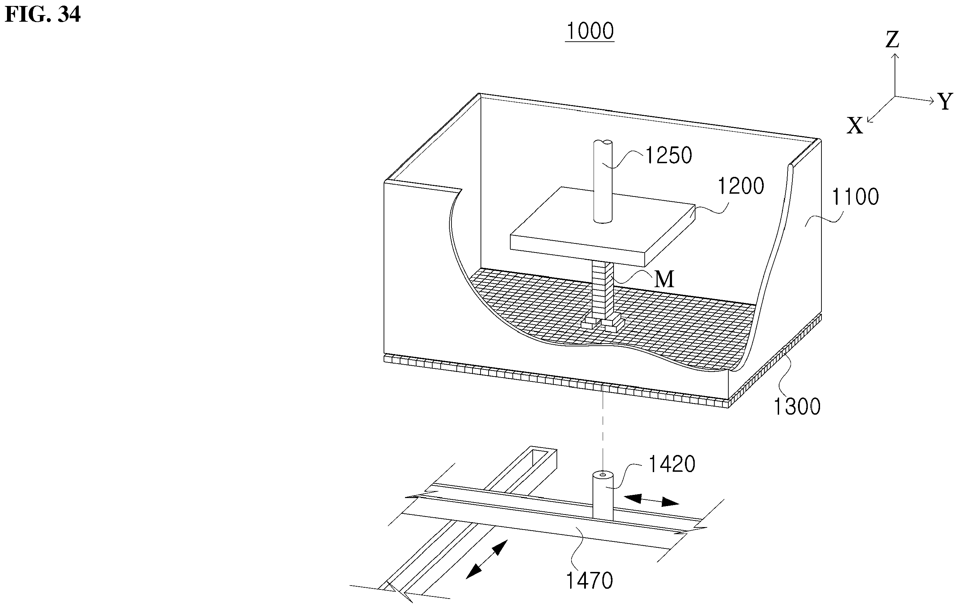

FIG. 34 is a cross-section view of a modified form of the third impartation example of the color 3D printer 1000 according to an embodiment of the present invention.

In the third impartation example, the curing module 1400 may be modified as shown in FIG. 37, that is, to include the light source 1420 and a 2D light source moving means 1470. In this case, the controller 1800 may move the 2D light source moving means 1470 in an x axis and a y axis so that light may be radiated to a pixel to be cured.

### VII. Fourth impartation example of color 3D printer

In the color 3D printer 1000 according to a fourth impartation example, the color imparting module 1300 and the curing module 1400 may be provided to be movable like in the modified form of the third impartation example.

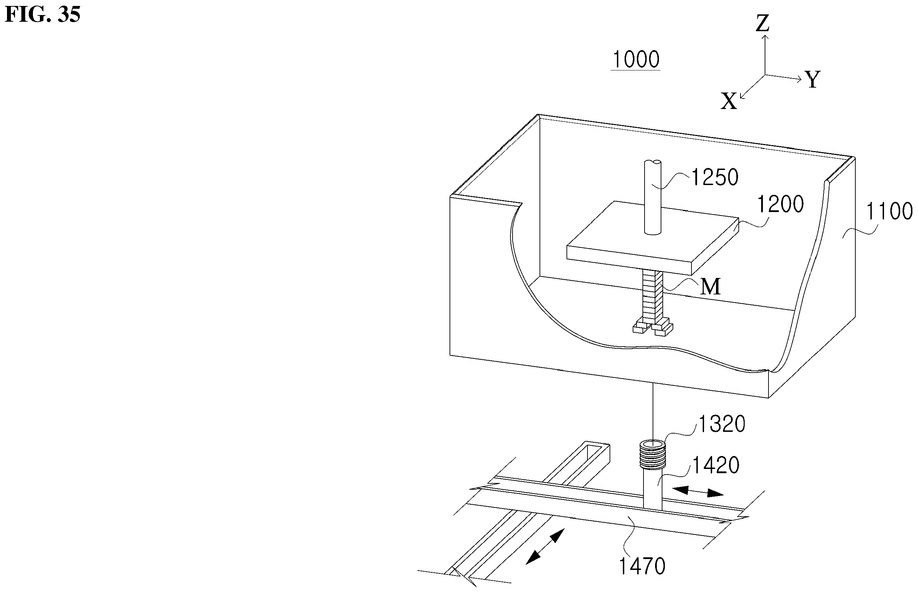

FIG. 35 is a fourth impartation example of the color 3D printer 1000 according to an embodiment of the present invention.

Referring to FIG. 35, the curing module 1400 is provided as the light source 1420 and the 2D light source moving means 1470 like in the modified third impartation example. Here, the color imparting module 1300 is provided in the form of an electromagnet and installed in the 2D light source moving means 1470 of the curing module 1400.

Here, a hole may be formed in the electromagnet, and the light source 1420 may emit light toward a working surface through the hole of the electromagnet.

Meanwhile, this impartation example may be modified so that only the electromagnet may be provided to be attached to the moving means 1470 and two-dimensionally movable on the working surface and the light source 1420 may be installed with a reflecting mirror as shown in FIG. 33 to emit light to the working surface at an angle adjusted by an angle adjusting unit.

Color printing using the 3D printer 1000 according to such a fourth impartation example may be performed as follows.

Like the other color 3D printing described above, a region of a work-target layer L is provided.

The controller 1800 determines an intensity of a magnetic field to be imparted to the electromagnet with reference to a color value in modeling data, acquires pixel coordinate from the modeling data, and determines a position to which the magnetic field will be applied according to the acquired pixel coordinate. Then, the magnetic field is applied to the specific pixel target so that a color may be imparted to the print medium 100.

Almost at the same time as this, the controller 1800 fixes the color by radiating light to the corresponding pixel coordinates and then cures the print medium 100.

When this operation is repeated for each pixel, color application and curing for specific layer L are completed. Such an operation is performed for each layer L until the 3D object M is generated, so that the 3D object M may be 3D printed.

Meanwhile, when the print medium 100 having the additional composition in which the main color particles 140 and the sub color particles 160 are mixed is used, the particle selecting module 1320' may be added to the 3D printer 1000 according to the third impartation example or the fourth impartation example. In the third impartation example, the particle selecting module 1320' may be disposed on or under the color imparting module 1300 as described with reference to the second impartation example. Alternatively, in the fourth impartation example, the particle selecting module 1320' can be provided on the electromagnet.

The above descriptions of the technical spirit of the present invention are exemplary only, and various changes and modifications can be made by those of ordinary skill in the art to which the present invention pertains without departing from the essential characteristics of the present invention. Therefore, the above-described embodiments of the present invention can be imparted independently of each other or in combination.

Consequently, the embodiments disclosed in the present invention are intended not to limit but to illustrate the technical spirit of the present invention, and the scope of the present invention is not limited by these embodiments. The scope of the present invention should be construed on the basis of the following claims, and all of the technical ideas included in the scope equivalent to the claims should be construed as being included in the scope of the present invention.

## Claims

1. A 3D printing method for fabricating a solid object 3D object by depositing a plurality of layers, the 3D printing method comprising:
preparing a print medium including a color particle and a curable material of a liquid state, the curable material containing the color particle,
wherein the color particle includes a photonic crystal particle and has a structural color defined according to a particle distance;
preparing a 3D modeling data for the 3Dobject,
wherein the 3D modeling data includes a layer data for at least one of the plurality of layers, and the layer data includes a shape data having a coordinate to be cured in the layer and a color data having a color value of the coordinate;
preparing a working area for a specific layer of the plurality of layers,
wherein the working area is a space having a predetermined thickness inward from a one surface of the printing medium;
imparting a color to the print medium, wherein the color is imparted by adjusting the structural color of the color particles based on the color value of the color data among the layer data for the specific layer;
by curing the curable material based on the coordinate of the shape data of the layer data for the specific layer, fixing the color imparted to the print medium and simultaneously fabricating the specific layer.

2. The 3D printing method as in claim 1,
wherein the color particle includes a magnetic core provided as a magnetic member and a coupling shell which is provided in a form of coating the magnetic core has a surface charge,
wherein the imparting a color comprises, applying a magnetic field to the print medium at an intensity corresponding to the color value to control the particle distance so that the color particle has the structural color corresponding to the color value.

3. The 3D printing method as in claim 2,
wherein the magnetic member includes at least one of Fe, Co, Ni, CoCu, CoPt, CoSm, NiFe, NiFeCo, γ-Fe₂O₃, Fe₃O₄, CoFe₂O₄, MnO, MnFe₂O₄, or BaFe₁₂O₁₉.

4. The 3D printing method as in claim 2,
wherein the coupling shell includes at least one of an acrylic polymer including cationic or anionic functional group, a silane-based polymer including cationic or anionic functional group, a titanate-based coupling agent including cationic or anionic functional group, or an aluminate-based coupling agent including cationic or anionic functional group.

5. The 3D printing method as in claim 2,
wherein the magnetic core further includes non-magnetic member,
the magnetic member is provided as form of coating the non-magnetic member.

6. The 3D printing method as in claim 5,
wherein the non-magnetic member includes at least one of SiO₂, Al₂O3, TiO₂, Polystyrene, Polymethylsilsesquioxane, and PMMA.

7. The 3D printing method as in claim 1,
wherein in the imparting the color, the color corresponding to the color value of the color data is imparted to each of a portion corresponding to the coordinate of the shape data through a whole region of the specific layer with reference to the shape data and color data, and
wherein in the fabricating the specific layer, the portion corresponding to the coordinate is cured in a state in which the color is imparted to each of the portion.

8. The 3D printing method as in claim 1,
wherein in the imparting the color, the imparting is performed to the whole region of the specific layer comprehensively,
wherein in the fabricating the specific layer, the curing is performed to on the coordinate selectively, wherein the coordinate has the specific color value with reference to the shape data in a state in which the specific color value is imparted through whole region of the specific layer,
fabricating the specific layer by repeating the imparting the color corresponding to the specific color value and the curing selectively only the coordinate having the specific color value.

9. The 3D printing method as in claim 1,
wherein the imparting the color comprises, determining the coordinate having a specific color value included in the color data of a whole region of the specific layer with reference to the shape data and imparting the specific color value to the determined coordinate,
wherein the fabricating the specific layer comprises, curing selectively only the determined coordinate, and
with respect to the all of the color value included in the color data, fabricating the specific layer by repeating the determining, the imparting the specific color value, and the curing selectively.

10. The 3D printing method as in claim 1, comprising,
classifying the coordinate of the shape data to a predetermined number of a coordinate group, wherein the coordinate group is a set of the coordinate spaced part from each other,
wherein the imparting the color comprises imparting the color to the portion corresponding to the coordinate included in a specific coordinate group of the coordinate group of the specific layer,
wherein the fabricating the specific layer comprises curing selectively the portion imparted the color, and
with respect to the all of the color value included in the color data, fabricating the specific layer by repeating the imparting the color to the portion corresponding to the coordinate included in the specific coordinate group, and the curing selectively the portion imparted the color.

11. The 3D printing method as in claim 10,
wherein the coordinate included in the coordinate group is composed of the coordinate in the diagonal direction with respect to each other.

12. The 3D printing method as in claim 1,
wherein the imparting the color comprises when the color value is the chromatic color, controlling the particle distance so that a reflected light corresponding to the particle distance of the photonic crystal particle corresponds to a chromatic color.

13. The 3D printing method as in claim 12,
wherein the color particle has structural color which is an achromatic color, wherein the imparting the color comprises imparting the color to a material color instead of the structural color of the color particle such that the photonic crystal particle has irregular the particle distance if the color value is the achromatic color.

14. The 3D printing method as in claim 11,
wherein imparting the color comprises when the color is an achromatic color, dividing a region, the region is to be imparted the achromatic color, to a sub-region, and imparting a chromatic color, the chromatic color is combination representing the achromatic color, to each of the sub-region.
